(19)

**Europäisches Patentamt**
**European Patent Office**
**Office européen des brevets**

(11) **EP 4 597 902 A1**

(12) **EUROPEAN PATENT APPLICATION**
published in accordance with Art. 153(4) EPC

(43) Date of publication:
06.08.2025 Bulletin 2025/32

(21) Application number: 23872961.0

(22) Date of filing: 21.09.2023

(51) International Patent Classification (IPC):
$H04L\ 5/00^{(2006.01)}$    $H04W\ 72/25^{(2023.01)}$
$H04W\ 72/04^{(2023.01)}$    $H04L\ 1/18^{(2023.01)}$
$H04L\ 1/00^{(2006.01)}$    $H04W\ 74/08^{(2024.01)}$
$H04W\ 72/232^{(2023.01)}$

(52) Cooperative Patent Classification (CPC):
H04L 1/00; H04L 1/18; H04L 5/00; H04W 72/04;
H04W 72/232; H04W 72/25; H04W 74/08

(86) International application number:
PCT/KR2023/014427

(87) International publication number:
WO 2024/071844 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.09.2022 KR 20220121535
04.11.2022 KR 20220146026
07.04.2023 KR 20230046353
13.07.2023 KR 20230091354
28.08.2023 KR 20230112865

(71) Applicant: Electronics and Telecommunications
Research Institute
Daejeon 34129 (KR)

(72) Inventors:
• UM, Jung Sun
Daejeon 34129 (KR)
• PARK, Sung Ik
Daejeon 34129 (KR)
• JUNG, Hoi Yoon
Daejeon 34129 (KR)
• HUR, Nam Ho
Daejeon 34129 (KR)

(74) Representative: Betten & Resch
Patent- und Rechtsanwälte PartGmbB
Maximiliansplatz 14
80333 München (DE)

(54) **METHOD AND DEVICE FOR FEEDBACK IN INTER-TERMINAL COMMUNICATION OF COMMUNICATION SYSTEM**

(57) The present invention relates to technology for feedback in an inter-terminal communication of a communication system. A method performed by a first terminal may comprise the steps of: receiving a PSSCH in a slot n from a second terminal through a sub-channel; determining PRB sets for transmitting a PSFCH corresponding to the PSSCH on the basis of the slot n and an index of the sub-channel; identifying a PRB set for transmitting the PSFCH among the PRB sets; identifying a slot, configured in order to transmit the PSFCH, K slots after the slot n; and using the identified PRB to transmit the PSFCH in the identified slot, wherein n and K are positive integers.

EP 4 597 902 A1

[FIG. 16]

candidate PSFCH resources

f(ID_aa, ID_bb)

frequency

slot

subchannel

IDX_Su
bCH=3

IDX_Su
bCH=2

IDX_Su
bCH=1

IDX_Su
bCH=0

IDX_PS
SCH4PS
FCH=0

IDX_PS
SCH4PS
FCH=1

IDX_PS
SCH4PS
FCH=2

IDX_PS
SCH4PS
FCH=3

time

PRB
domain

cyclic shift
pair index
domain

F_1

F_2

F_2

F_2

F_2

F_2

EP 4 597 902 A1

## Description

[Technical Field]

The present disclosure relates to a feedback technique for communication between terminals in a communication system, and more particularly, to a feedback technique for communication between terminals in a communication system, which enables transmission of a feedback channel on a sidelink in consideration of an unlicensed frequency usage condition.

[Background Art]

With the development of information and communication technology, various wireless communication technologies have been developed. Typical wireless communication technologies include long term evolution (LTE) and new radio (NR), which are defined in the 3rd generation partnership project (3GPP) standards. The LTE may be one of 4th generation (4G) wireless communication technologies, and the NR may be one of 5th generation (5G) wireless communication technologies.

For the processing of rapidly increasing wireless data after the commercialization of the 4th generation (4G) communication system (e.g., Long Term Evolution (LTE) communication system or LTE-Advanced (LTE-A) communication system), the 5th generation (5G) communication system (e.g., new radio (NR) communication system) that uses a frequency band (e.g., a frequency band of 6 GHz or above) higher than that of the 4G communication system as well as a frequency band of the 4G communication system (e.g., a frequency band of 6 GHz or below) is being considered. The 5G communication system may support enhanced Mobile BroadBand (eMBB), Ultra-Reliable and Low-Latency Communication (URLLC), and massive Machine Type Communication (mMTC).

Meanwhile, in a communication system, terminals may transmit or receive data using a sidelink (SL). Additionally, terminals may inform other terminals whether or not data has been received through a feedback channel of the sidelink. The sidelink may be configured in an unlicensed band. When a terminal satisfies a condition for using an unlicensed frequency, the terminal can transmit a feedback channel through the sidelink of the unlicensed band. Here, the condition for using the unlicensed frequency may require identification of a channel occupancy state of a radio resource desired to be used by the terminal. As a result of identifying the channel occupancy state, the radio resource that the terminal desires to use may already be occupied by another terminal. In this situation, the communication system may configure a transmission resource for the feedback channel to transmit the feedback channel by considering the condition for using the unlicensed frequency.

Matters described as the prior arts are prepared to promote understanding of the background of the present disclosure, and may include matters that are not already known to those of ordinary skill in the technology domain to which exemplary embodiments of the present disclosure belong.

[Disclosure]

[Technical Problem]

The present disclosure is directed to providing a feedback method and apparatus for communication between terminals in a communication system, which enable transmission of a feedback channel on a sidelink in consideration of an unlicensed frequency usage condition.

[Technical Solution]

A feedback method for communication between terminals in a communication system, according to a first exemplary embodiment of the present disclosure for achieving the above-described objective, may comprise, as a method of first terminal, receiving a physical sidelink shared channel (PSSCH) from a second terminal through a subchannel in a slot n; determining a physical resource block (PRB) set for transmitting a physical sidelink feedback channel (PSFCH) for the PSSCH based on the slot n and an index of the subchannel; identifying PRB(s) for transmitting the PSFCH from the PRB set; identifying a slot configured for transmitting the PSFCH after K slots from the slot n; and transmitting the PSFCH using the identified PRB(s) in the identified slot.

In the identifying of the slot configured for transmitting the PSFCH after K slots from the slot n, the first terminal may identify the slot configured for transmitting the PSFCH according to a PRB index determined based on at least one of the index of the subchannel configured for the PSSCH, the slot n, the K slots, an identifier (ID) of the first terminal, an ID of the second terminal, or a code q, the code q may indicate a cyclic shift or a cyclic shift pair, and q may be a positive real number.

The feedback method may further comprise, before transmitting the PSFCH using the identified PRB(s) in the identified slot, identifying a transmission mode of the PSSCH; and in response to identifying that the transmission mode is a unicast mode, identifying a hybrid automatic repeat and request (HARQ) feedback state, wherein the PSFCH is transmitted when the HARQ feedback sate is in an enabled state.

The method may further comprise, before transmitting the PSFCH using the identified PRB(s) in the identified slot, identifying a transmission mode of the PSSCH; and in response to identifying that the transmission mode is a groupcast or broadcast mode, identifying an HARQ feedback state, wherein the PSFCH is transmitted based on a negative acknowledgement (NACK)-only scheme when the HARQ feedback sate is in an enabled state.

A feedback method for communication between terminals in a communication system, according to a second exemplary embodiment of the present disclosure for achieving the above-described objective, may comprise, as a method of a first terminal, receiving a physical sidelink shared channel (PSSCH) from a second terminal; generating PRB sets with unit physical sidelink feedback channel (PSFCH) resources each comprising a combination of PRB(s) and a cyclic shift; configuring a candidate PSFCH set with a predetermined number of PRB sets from the PRB sets based on an index of a subchannel through which the PSSCH is received; determining an index of a unit PSFCH resource for transmitting a PSFCH from the candidate PSFCH set; and transmitting the PSFCH to the second terminal using a unit PSFCH resource corresponding to the index of the determined unit PSFCH resource.

The generating of the PRB sets with unit PSFCH resources each comprising a combination of PRB(s) and a cyclic shift may comprise: generating the PRB sets based on at least one of a transmission periodicity of a PSFCH transmission occasion resource (PSFCH TRP), PSFCH type, number of the PRB sets, number of cyclic shifts, or number N_C_PSFCH of repeated transmissions.

The method may further comprise, before generating the PRB sets with unit PSFCH resources each comprising a combination of PRB(s) and a cyclic shift, receiving, from the base station, information on the transmission periodicity of the PSFCH TRP; receiving, from the base station, information on the PSFCH type; receiving, from the base station, information on the number of the PRB sets constituting PSFCH resources; and receiving, from the base station, information on the number of cyclic shifts constituting PSFCH resources.

The determining of the index of the unit PSFCH resource for transmitting the PSFCH from the candidate PSFCH set may comprise: determining the index of the unit PSFCH resource as a value obtained by performing a modulo operation on a sum of an identifier (ID) of the first terminal and an ID of the second terminal by a size of the candidate PSFCH set.

The method may further comprise: defining a PSFCH sequence generation factor according to an index of a cyclic shift pair corresponding to the index of the unit PSFCH resource; and generating a Zadoff-Chu sequence constituting the PSFCH according to the PSFCH sequence generation factor, wherein the first terminal transmits the PSFCH including the Zadoff-Chu sequence to the second terminal.

The unit PSFCH resources may be unit interlace PSFCH resources each comprising a combination of PRB(s) and a cyclic shift pair, the PRB sets may be interlace PRB sets, the candidate PSFCH set may be a candidate interlaced PSFCH set comprising a predetermined number of interlaced PRB sets respectively mapped to indexes of cyclic shift pairs in the interlace PRB sets based on an index of the subchannel through which the PSSCH is received, and an index of the unit PSFCH resource may be an index of a unit interlace PSFCH resource.

The method may further comprise: forming PSSCH-PSFCH transmission groups each including a PSFCH slot and PSSCH slots associated with the PSFCH slot; mapping each of the PSSCH-PSFCH transmission groups to a PSFCH occasion slot; determining an index of a cyclic shift pair for transmitting the PSFCH based on at least one of the ID of the first terminal, the ID of the second terminal, or an index of the PSSCH-PSFCH transmission group; and determining an index of a unit interlace PSFCH resource for transmitting the PSFCH in the candidate interlace PSFCH resource based on the index of the determined cyclic shift pair.

The first terminal may transmit the PSFCH to the second terminal, when an LBT procedure is required for transmission of the PSFCH and the LBT procedure is successful.

The first terminal may not transmit the PSFCH to the second terminal, when the first terminal receives a non-transmission indication for PSFCH transmission.

A feedback apparatus for communication between terminals in a communication system, according to a third exemplary embodiment of the present disclosure for achieving the above-described objective, may comprise, as a first terminal, a processor, and the processor may cause the first terminal to perform: receiving a physical sidelink shared channel (PSSCH) from a second terminal; generating PRB sets with unit physical sidelink feedback channel (PSFCH) resources each comprising a combination of PRB(s) and a cyclic shift; configuring a candidate PSFCH set with a predetermined number of PRB sets from the PRB sets based on an index of a subchannel through which the PSSCH is received; determining an index of a unit PSFCH resource for transmitting a PSFCH from the candidate PSFCH set; and transmitting the PSFCH to the second terminal using a unit PSFCH resource corresponding to the index of the determined unit PSFCH resource.

In the generating of the PRB sets with unit PSFCH resources each comprising a combination of PRB(s) and a cyclic shift, the processor may further cause the first terminal to perform: generating the PRB sets based on at least one of a transmission periodicity of a PSFCH transmission occasion resource (PSFCH TRP), PSFCH type, number of the PRB sets, number of cyclic shifts, or number N_C_PSFCH of repeated transmissions.

Before generating the PRB sets with unit PSFCH resources each comprising a combination of PRB(s) and a cyclic shift, the processor may further cause the first terminal to perform: receiving, from the base station, information on the transmission periodicity of the PSFCH TRP; receiving, from the base station, information on the PSFCH type; receiving, from the base station, information on the number of the PRB sets constituting PSFCH resources; and receiving, from the base station, information on the number of cyclic shifts constituting PSFCH resources.

In the determining of the index of the unit PSFCH resource for transmitting the PSFCH from the candidate PSFCH set, the processor may further cause the first terminal to perform: determining the index of the unit PSFCH resource as a value obtained by performing a modulo operation on a sum of an identifier (ID) of the first terminal and an ID of the second terminal by a size of the candidate PSFCH set.

The processor may further cause the first terminal to perform: defining a PSFCH sequence generation factor according to an index of a cyclic shift pair corresponding to the index of the unit PSFCH resource; and generating a Zadoff-Chu sequence constituting the PSFCH according to the PSFCH sequence generation factor, wherein the first terminal transmits the PSFCH including the Zadoff-Chu sequence to the second terminal.

The unit PSFCH resources may be unit interlace PSFCH resources each comprising a combination of PRB(s) and a cyclic shift pair, the PRB sets may be interlace PRB sets, the candidate PSFCH set may be a candidate interlaced PSFCH set comprising a predetermined number of interlaced PRB sets respectively mapped to indexes of cyclic shift pairs in the interlace PRB sets based on an index of the subchannel through which the PSSCH is received, and an index of the unit PSFCH resource may be an index of a unit interlace PSFCH resource.

The processor may further cause the first terminal to perform: forming PSSCH-PSFCH transmission groups each including a PSFCH slot and PSSCH slots associated with the PSFCH slot; mapping each of the PSSCH-PSFCH transmission groups to a PSFCH occasion slot; determining an index of a cyclic shift pair for transmitting the PSFCH based on at least one of the ID of the first terminal, the ID of the second terminal, or an index of the PSSCH-PSFCH transmission group; and determining an index of a unit interlace PSFCH resource for transmitting the PSFCH in the candidate interlace PSFCH resource based on the index of the determined cyclic shift pair.

[Advantageous Effects]

According to the present disclosure, it is possible to determine a method of configuring or transmitting a sidelink feedback channel while satisfying a technical conditions required for transmitting a signal/channel using an unlicensed frequency band. In addition, the present disclosure provides methods for configuring resources, selecting resources, and/or performing transmission of a PSFCH that has not been transmitted according to an LBT result. In addition, the present disclosure provides methods for configuring resources satisfying a technical condition of using resources equal to or more than a certain ratio of a defined channel bandwidth.

[Description of Drawings]

FIG. 1 is a conceptual diagram illustrating a first exemplary embodiment of a communication system.
FIG. 2 is a block diagram illustrating an exemplary embodiment of a communication node constituting a communication system.
FIG. 3 is a conceptual diagram illustrating a first exemplary embodiment of a system frame in a communication system.
FIG. 4 is a conceptual diagram illustrating a first exemplary embodiment of a subframe in a communication system.
FIG. 5 is a conceptual diagram illustrating a first exemplary embodiment of a slot in a communication system.
FIG. 6 is a conceptual diagram illustrating a second exemplary embodiment of a slot in a communication system.
FIG. 7 is a conceptual diagram illustrating a first exemplary embodiment of a time-frequency resource in a communication system.
FIG. 8 is a conceptual diagram illustrating a first exemplary embodiment of downlink channels configured within a slot in a communication system.
FIG. 9 is a conceptual diagram illustrating a second exemplary embodiment of downlink channels configured within a slot in a \communication system.
FIG. 10 is a conceptual diagram illustrating a first exemplary embodiment of a PDCCH monitoring occasion in a communication system.
FIG. 11 is a conceptual diagram illustrating a second exemplary embodiment of a PDCCH monitoring occasion in a communication system.

FIG. 12 is a conceptual diagram illustrating a first exemplary embodiment of configuration of a resource pool, SL signals, and SL channels within an SL bandwidth part (BWP).

FIG. 13 is a conceptual diagram illustrating a first exemplary embodiment of SL resources.

FIG. 14 is a conceptual diagram illustrating a first exemplary embodiment of a channel occupancy time in a communication system.

FIG. 15 is a conceptual diagram illustrating a second exemplary embodiment of a channel occupancy time in a communication system.

FIG. 16 is a conceptual diagram illustrating a first exemplary embodiment of PSFCH resources in a communication system.

FIG. 17 is a conceptual diagram illustrating a second exemplary embodiment of PSFCH resources in a communication system.

FIG. 18 is a conceptual diagram illustrating a first exemplary embodiment of a PSSCH-PSFCH transmission group and a method for indicating a PSFCH transmission LBT failure or non-transmission of PSFCH.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

A wireless communication network to which exemplary embodiments according to the present disclosure are applied will be described. The wireless communication network to which the exemplary embodiments according to the present disclosure are applied is not limited to the content described below, and the exemplary embodiments according to the present disclosure may be applied to various wireless communication networks. Here, a wireless communication network may be used in the same sense as a wireless communication system.

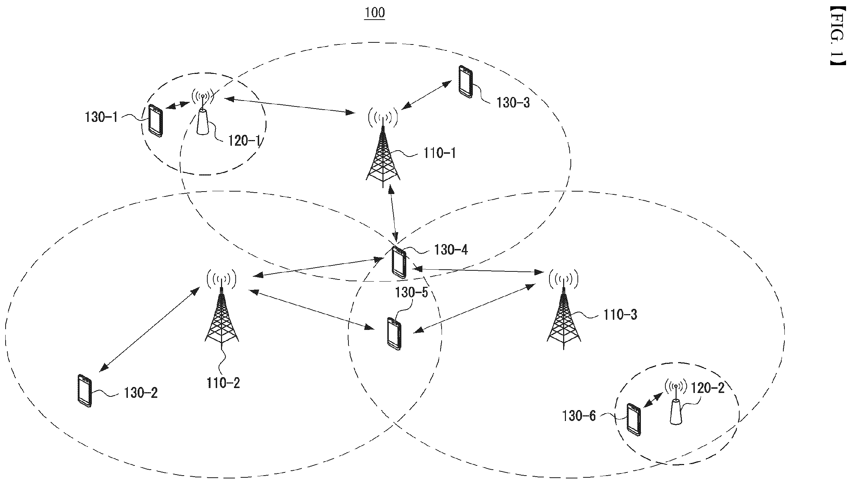

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Here, the communication system may be referred to as a 'communication network'. Each of the plurality of communication nodes may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, orthogonal frequency division multiple access (OFDMA) based communication protocol, single-carrier FDMA (SC-FDMA) based communication protocol, non-orthogonal multiple access (NOMA) based communication protocol, space division multiple access (SDMA) based communication protocol, or the like. Each of the plurality of communication nodes may have the following structure.

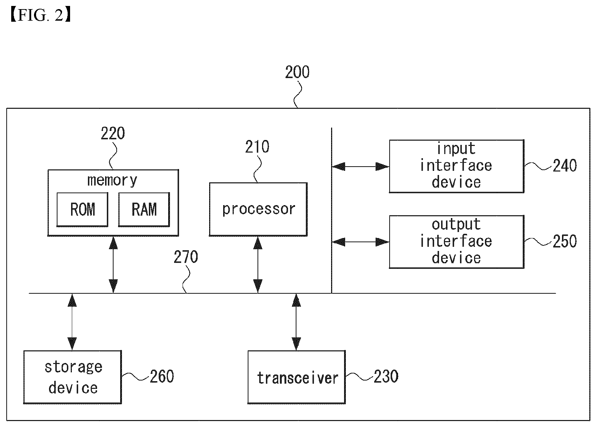

FIG. 2 is a block diagram illustrating an exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270. However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of user equipments (UEs) 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, a evolved Node-B (eNB), a base transceiver station (BTS), a radio base station, a radio transceiver, an access point, an access node, a road side unit (RSU), a digital unit (DU), a cloud digital unit (CDU), a radio remote head (RRH), a radio unit (RU), a transmission point (TP), a transmission and reception point (TRP), a relay node, or the like. Here, each of the plurality of terminals 130-1, 130-2, 130-3, 130-4, 130-5, and 130-6 may refer to a user equipment (UE), a terminal, an access terminal, a mobile terminal, a station, a subscriber station, a mobile station, a portable subscriber station, a node, a device, or the like.

Each of the plurality of communication nodes 110-1, 110-2, 110-3, 120-1, 120-2, 130-1, 130-2, 130-3, 130-4, 130-5, and 130-6 may support cellular communication (e.g., long term evolution (LTE), LTE-Advanced (LTE-A), or the like specified in the 3rd generation partnership project (3GPP)). The plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding UE 130-1, 130-2, 130-3, 130-4, 130-5, or 130-6, and transmit a signal received from the corresponding UE 130-1, 130-2, 130-3, 130-4, 130-5, or 130-6 to the core network.

Each of the plurality of base stations 110-1, 110-2, 110-3, 120-1, and 120-2 may support OFDMA-based downlink transmission and SC-FDMA-based uplink transmission. In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, device-to-device (D2D) communications (or, proximity services (ProSe)), or the like. Here, each of the plurality of UEs 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2.

Hereinafter, operation methods of a communication node in a wireless communication network will be described.

Even when a method (e.g., transmission or reception of a signal) performed at a first communication node among communication nodes is described, the corresponding second communication node may perform a method (e.g., reception or transmission of the signal) corresponding to the method performed at the first communication node. That is, when an operation of a terminal is described, a corresponding base station may perform an operation corresponding to the operation of the terminal. Conversely, when an operation of a base station is described, a corresponding terminal may perform an operation corresponding to the operation of the base station.

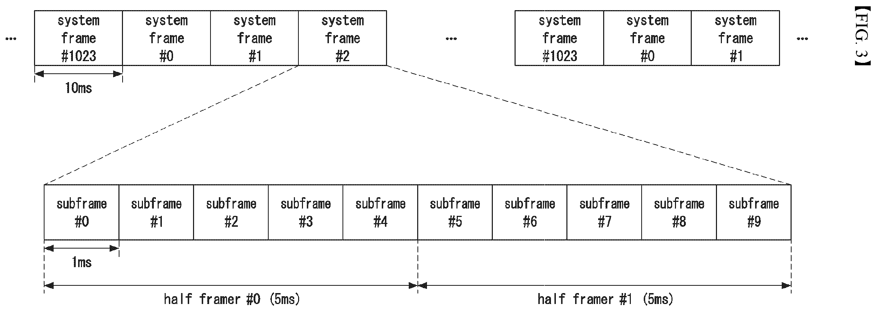

FIG. 3 is a conceptual diagram illustrating a first exemplary embodiment of a system frame in a communication system.

Referring to FIG. 3, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

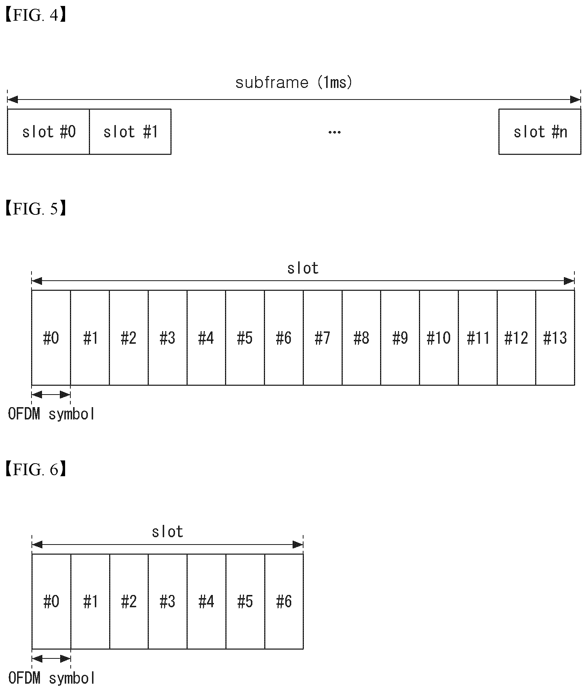

FIG. 4 is a conceptual diagram illustrating a first exemplary embodiment of a subframe in a communication system.

Referring to FIG. 4, one subframe may include n slots, and n may be a natural number. Accordingly, one subframe may consist of one or more slots.

FIG. 5 is a conceptual diagram illustrating a first exemplary embodiment of a slot in a communication system.

Referring to FIG. 5, one slot may include one or more symbols. For example, one slot may include 14 symbols.

FIG. 6 is a conceptual diagram illustrating a second exemplary embodiment of a slot in a communication system.

Referring to FIG. 6, one slot may include one or more symbols. For example, one slot may include 7 symbols.

The length of slot in FIGS. 5 and 6 may vary according to the number of symbols included in a slot and the length of symbol. Alternatively, the length of slot may vary according to a numerology $\mu$. Here, $\mu$ may be a positive integer or 0. When a subcarrier spacing is 15 kHz (e.g., $\mu = 0$), the length of slot may be 1 ms. In this case, one system frame may include 10 slots. When a subcarrier spacing is 30 kHz (e.g., $\mu = 1$), the length of slot may be 0.5 ms. In this case, one system frame may include 20 slots.

When a subcarrier spacing is 60 kHz (e.g., $\mu = 2$), the length of slot may be 0.25 ms. In this case, one system frame may include 40 slots. When a subcarrier spacing is 120 kHz (e.g., $\mu = 3$), the length of slot may be 0.125 ms. In this case, one system frame may include 80 slots. When a subcarrier spacing is 240 kHz (e.g., $\mu = 4$), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

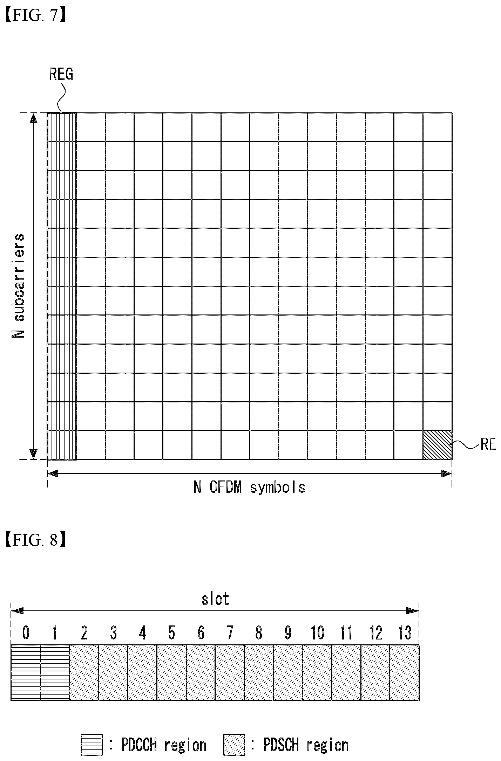

FIG. 7 is a conceptual diagram illustrating a first exemplary embodiment of a time-frequency resource in a communication system.

Referring to FIG. 7, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG. 5, N may be 14. N OFDM symbols may be used as a basic unit of resource allocation in the time domain.

Hereinafter, methods for transmitting and receiving data in a communication network will be described. In downlink communication, downlink data may be transmitted through a PDSCH. In uplink communication, uplink data may be transmitted through a PUSCH. In the present disclosure, a PDSCH may refer to downlink data or a resource through which the downlink data is transmitted and received, and a PUSCH may refer to uplink data or a resource through which the uplink data is transmitted and received. The base station may transmit downlink control information (DCI) including configuration information (e.g., resource allocation information, scheduling information) of a PDSCH through a physical downlink control channel (PDCCH). In the present disclosure, a PDCCH may refer to DCI (e.g., control information) or a resource through which the DCI is transmitted.

The terminal may receive the DCI on the PDCCH and identify the configuration information of the PDSCH included in the DCI. For example, the configuration information of the PDSCH may include time domain resource assignment (TDRA), frequency domain resource assignment (FDRA), and/or modulation and coding scheme (MCS) information. The TDRA may indicate a resource region of the PDSCH in the time domain. The FDRA may indicate a resource region of the PDSCH in the frequency domain. The MCS information may indicate an MCS level or MCS index.

FIG. 8 is a conceptual diagram illustrating a first exemplary embodiment of downlink channels configured within a slot in a communication system.

Referring to FIG. 8, one slot may include 14 OFDM symbols in the time domain. Among the 14 OFDM symbols, some symbol(s) may be configured as a PDCCH region, and the remaining symbols may be configured as a PDSCH region. For example, OFDM symbols #0-#1 may be configured as a PDCCH region, and OFDM symbols #2-#13 may be configured as a PDSCH region.

The PDCCH region may be configured from a start of the slot, and the PDSCH region may be configured after the PDCCH region within the slot. This mapping type may be referred to as 'PDSCH mapping type A'. When the PDSCH mapping type A is used, a position of a demodulation reference signal (DMRS) in the time domain may be defined based on the first OFDM symbol (e.g., OFDM symbol #0) of the slot. For example, if a symbol offset of the DMRS is 2, the DMRS may be located in the OFDM symbol #2 within the slot.

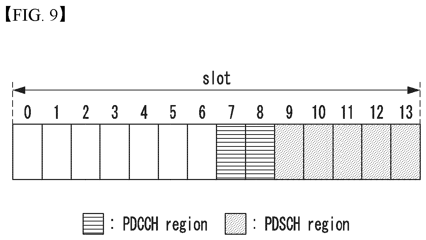

FIG. 9 is a conceptual diagram illustrating a second exemplary embodiment of downlink channels configured within a slot in a \communication system.

Referring to FIG. 9, one slot may include 14 OFDM symbols in the time domain. A PDCCH region may be configured in any symbol(s) within the slot, and a PDSCH region may be configured after the PDCCH region within the slot. For example, symbols #7-#8 may be configured as a PDCCH region, and symbols #9-#13 may be configured as a PDSCH region. This mapping type may be referred to as 'PDSCH mapping type B'. When the PDSCH mapping type B is used, a position of a DMRS in the time domain may be defined based on the first symbol (e.g., symbol #9) in which a PDSCH is configured. For example, if a symbol offset of the DMRS is 2, the DMRS may be located in the symbol #11 within the slot.

Hereinafter, PDCCH monitoring methods will be described. The terminal may perform a PDCCH monitoring operation to receive DCI including scheduling information of a PDSCH. Configuration information for PDCCH monitoring may be transmitted from the base station to the terminal through a higher layer message (e.g., radio resource control (RRC) message). The configuration information for PDCCH monitoring may be included in control resource set (CORESET) information and/or search space information.

The CORESET information may include one or more of the following parameters.

- *controlResourceSetId* (e.g., CORESET ID)
- *frequencyDomainResources* (e.g., frequency resource information of CORESET)
- *duration* (e.g., time resource information of CORESET (e.g., search space))
- *cce-REG-mappingType* (e.g., interleaving information of PDCCH)
- *precoderGranularity* (e.g., precoding information of PDCCH)
- *tci-StatesPDCCH*
- *tci-PresentInDCI*
- *pdcch-DMRS-ScramblingID* (e.g., information on a DMRS for PDCCH demodulation)

The frequency resource information of CORESET (e.g., information on a frequency resource in which PDCCHs may exist) may be configured in units of n RBs. n may be a natural number. For example, n may be 6. The time resource information of CORESET (e.g., information on a time resource in which PDCCHs may exist) may be configured in units of m OFDM symbols. m may be a natural number. For example, m may be 1, 2, or 3.

The search space information may include one or more of the following parameters.

- *searchSpaceId* (e.g., search space ID)
- *controlResourceSetId* (e.g., ID of a CORESET associated with the search space)
- *monitoringSlotPeriodicityAndOffset* (e.g., periodicity and offset of PDCCH monitoring slot(s), the periodicity and offset of PDCCH monitoring slot(s) may be configured in units of slots)
- *duration* (e.g., the number of consecutive slots on which PDCCH monitoring is performed)
- *monitoringSymbolsWithinSlot* (e.g., the first symbol(s) in which PDCCH monitoring is performed within a slot, the corresponding symbol(s) may be indicated in a bitmap form)
- *nrofCandidates* (e.g., the number of PDCCH candidates per aggregation level)
- *searchSpaceType* (e.g., common search space (CSS), UE-specific search space (USS), DCI formats to be monitored)

The terminal may receive the CORESET information and the search space information from the base station. The terminal may identify PDCCH monitoring occasion(s) based on the CORESET information and search space information. The terminal may perform a monitoring operation on the PDCCH monitoring occasion(s). The PDCCH monitoring occasion may be configured as follows.

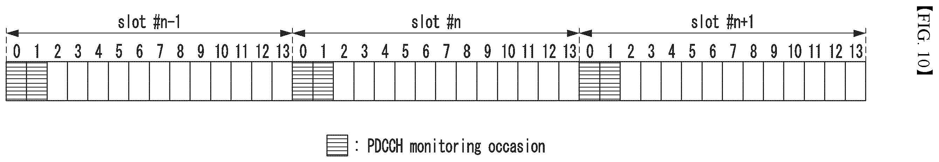

FIG. 10 is a conceptual diagram illustrating a first exemplary embodiment of a PDCCH monitoring occasion in a communication system.

Referring to FIG. 10, the length of the PDCCH monitoring occasion in the time domain may be indicated by the CORESET information (e.g., duration). The length of the PDCCH monitoring occasion may be indicated in units of symbols. For example, the length of the PDCCH monitoring occasion may be 2 symbols. In each of the slots, symbols #0-#1 may be configured as the PDCCH monitoring occasion, and a periodicity of a PDCCH monitoring occasion slot may be one slot. In this case, an offset of the PDCCH monitoring occasion slot may be 0.

The terminal may identify the PDCCH monitoring occasion using the search space information and the CORESET information associated with the corresponding search space information (e.g., CORESET information mapped to a CORESET ID included in the search space information). For example, the terminal may identify a starting symbol (e.g., symbol #0) of the PDCCH monitoring occasion within a slot based on *monitoringSlotPeriodicityAndOffset* and *monitoringSymbolsWithinSlot* included in the search space information, and may identify the length (e.g., 2 symbols) of the PDCCH monitoring occasion based on *duration* included in the associated CORESET information. The terminal may perform a monitoring operation (e.g., blind decoding operation) on the identified PDCCH monitoring occasion.

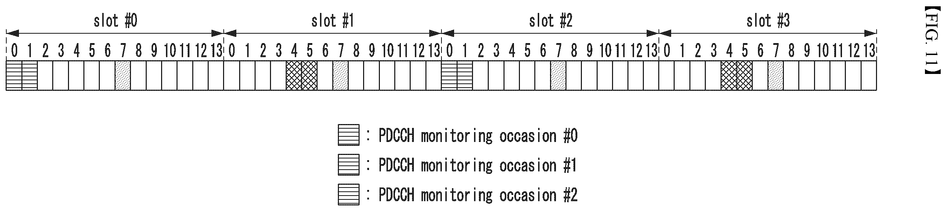

FIG. 11 is a conceptual diagram illustrating a second exemplary embodiment of a PDCCH monitoring occasion in a communication system.

Referring to FIG. 11, a plurality of CORESETs (e.g., CORESETs #0-#1) and a plurality of search spaces (e.g., search spaces #0-#3) may be configured. The base station may transmit information on the CORESET #0 and information on the CORESET #1 to the terminal, and may transmit information on the search space #0, information on the search space #1, and information on the search space #2 to the terminal. The terminal may receive the information on the CORESETs #0-#1 and the information on the search spaces #0-#2 from the base station, and may identify the PDCCH monitoring occasions based on the information on the CORESETs #0-#1 and the information on the search spaces #0-#2.

The search space #0 may be associated with the CORESET #0. Based on the information on the search space #0 and the information on the CORESET #0, the length of a PDCCH monitoring occasion #0 in the time domain may be one symbol, a starting symbol of the PDCCH monitoring occasion #0 may be the symbol #7, a periodicity for the PDCCH monitoring occasion #0 may be one slot, and an offset for the PDCCH monitoring occasion #0 may be 0. Accordingly, the terminal may perform a monitoring operation (e.g., blind decoding operation) on the PDCCH monitoring occasion #0 configured in the symbol #7 of each slot. The terminal may detect DCI by performing the monitoring operation on the PDCCH monitoring occasion #0, and may acquire a PDSCH based on information included in the DCI.

The search space #1 may be associated with the CORESET #1. Based on the information on the search space #1 and the information on the CORESET #1, the length of a PDCCH monitoring occasion #1 in the time domain may be two symbols, a starting symbol of the PDCCH monitoring occasion #1 may be the symbol #0, a periodicity for the PDCCH monitoring occasion #1 may be two slots, and an offset for the PDCCH monitoring occasion #1 may be 0. Accordingly, the terminal may perform a monitoring operation (e.g., blind decoding operation) on the PDCCH monitoring occasion #1 configured in the symbols #0-#1 of the slots #0 and #2. The terminal may detect DCI by performing the monitoring operation on the PDCCH monitoring occasion #1, and may acquire a PDSCH based on information included in the DCI.

The search space #2 may be associated with the CORESET #1. Based on the information on the search space #2 and the information on the CORESET #1, the length of a PDCCH monitoring occasion #2 in the time domain may be two symbols, a starting symbol of the PDCCH monitoring occasion #2 may be the symbol #4, a periodicity for the PDCCH monitoring occasion #2 may be two slots, and an offset for the PDCCH monitoring occasion #2 may be 1. Accordingly, the terminal may perform a monitoring operation (e.g., blind decoding operation) on the PDCCH monitoring occasion #2 configured in the symbols #4-#5 of the slots #1 and #3. The terminal may detect DCI by performing the monitoring operation on the PDCCH monitoring occasion #2, and may acquire a PDSCH based on information included in the DCI.

Sidelink (SL) communication methods in a communication network will be described. SL communication may be performed in a licensed band and/or unlicensed band. SL communication in an unlicensed band may be referred to as sidelink-unlicensed (SL-U) communication or unlicensed-sidelink (U-SL) communication. SL resources may be used for transmission of SL signals and/or channels. SL resources nay be configured on a resource pool basis. A resource pool may be referred to as an SL resource pool. The resource pool may include a Tx resource pool and/or an Rx resource pool. The Tx resource pool may be used for SL transmission, and the Rx resource pool may be used for SL reception. The Tx resource pool and Rx resource pool may be distinguished from each other. The Tx resource pool and Rx resource pool may be configured independently.

In the time domain, a resource pool may include one or more slots, and in the frequency domain, a resource pool may include one or more subchannels. One subchannel may include $N_{PRB}$ physical resource blocks (PRBs). $N_{PRB}$ may be one of 10, 12, 15, 20, 25, 50, 75, or 100. The resource pool may be configured periodically. For example, a resource pool may be configured at a periodicity of 10240 milliseconds (ms) in the time domain. Among all slots belonging to a period corresponding to the periodicity of 10240ms, some slots may be configured as a resource pool. Depending on a time division duplex (TDD) configuration, slot(s) including downlink (DL) symbol(s) may not be configured as a resource pool. Slot(s) including resource(s) in which a sidelink-synchronization signal block (S-SSB) is transmittable may not be configured as a resource pool. Slot(s) configurable as a resource pool may be defined by a bitmap. In other words, the bitmap may indicate slot(s) configurable as a resource pool.

EP 4 597 902 A1

Meanwhile, sidelink (SL) channels may be as follows. In other words, a sidelink channel may deliver traffic, data, etc. related to sidelink services. Alternatively, a sidelink channel may deliver control information related to sidelink management and scheduling.

The SL channels may be used for transmission and reception of traffic (e.g., data), management information, and/or control information (e.g., control information related to scheduling) related to SL services. The SL channels may include Physical Sidelink Broadcast Channel (PSBCH), Physical Sidelink Shared Channel (PSSCH), Physical Sidelink Control Channel (PSCCH), and/or Physical Sidelink Feedback Channel (PSFCH). SL signals may include synchronization signals (e.g., sidelink-primary synchronization signal (S-PSS), sidelink-secondary synchronization signal (S-SSS)) and/or reference signals (e.g., demodulation reference signal (DMRS), channel state information-reference signal (CSI-RS), phase tracking (PT)-RS, and/or positioning reference signal (PRS).

The PSSCH may be a channel used for transmission and reception of a transport block (TB), data, and/or traffic. The PSCCH may be a channel used for transmission and reception of control information. The PSFCH may be a channel used for transmission and reception of hybrid automatic repeat request (HARQ) feedback indicating a PSSCH reception status. A sidelink-synchronization signal block (S-SSB) may include at least one of the PSBCH, S-PSS, or S-SSS. The S-SSB may further include a DMRS. Synchronization between terminals may be performed using the synchronization signals (e.g., S-PSS and/or S-SSS).

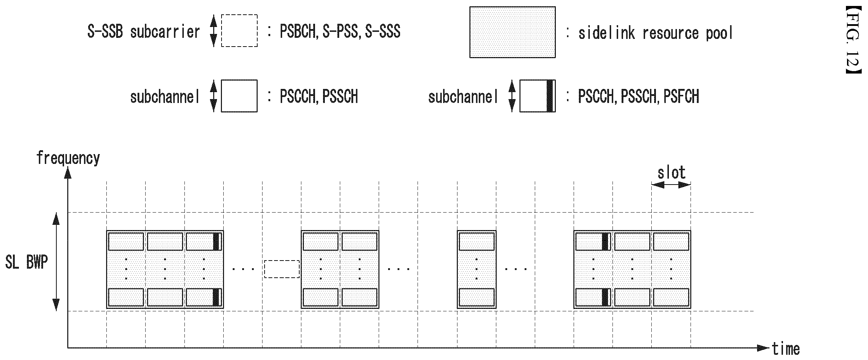

FIG. 12 is a conceptual diagram illustrating a first exemplary embodiment of configuration of a resource pool, SL signals, and SL channels within an SL bandwidth part (BWP).

Referring to FIG. 12, a resource pool may include one or more slots excluding slot(s) that do not meet a configuration condition of the resource pool and/or slot(s) not indicated by a bitmap among a plurality of slots. Non-consecutive slots in the time domain may be interpreted as consecutive slots within the resource pool. In other words, even when the slots configured as the resource pool are not consecutive, indexes of the slots within the resource pool may be consecutive.

In the present disclosure, SL resources (e.g., SL transmission resources) may refer to resources within the resource pool. SL resources may refer to resources for transmission of SL signals and/or SL channels. In the present disclosure, signal transmission may refer to transmission of an SL signal and/or SL channel, and signal reception may refer to reception of an SL signal and/or SL channel. 'Signal' may be interpreted as 'signal' or 'signal + channel', and 'channel' may be interpreted as 'channel' or channel + signal'. 'SL signal/channel' may be interpreted as 'SL signal', 'SL channel', or 'SL signal + SL channel'.

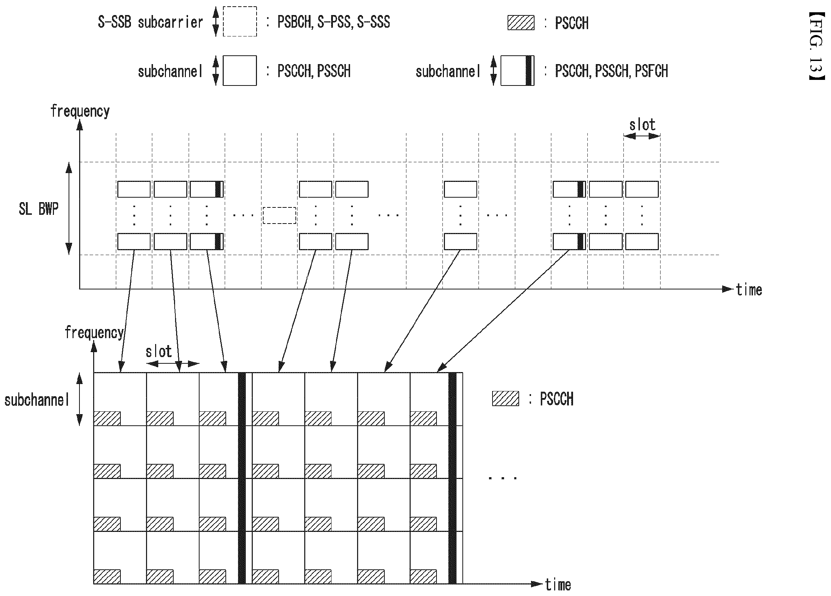

FIG. 13 is a conceptual diagram illustrating a first exemplary embodiment of SL resources.

Referring to FIG. 13, a basic transmission unit of an SL signal/channel in the time domain may be one slot, and a basic transmission unit of an SL signal/channel in the frequency domain may be one subchannel. A transmission resource of an SL signal/channel may include one or more slots and/or one or more subchannels. A transmission resource may include a PSCCH and/or PSSCH. Additionally, a transmission resource may include a PSFCH. A slot (e.g., slot position) including PSFCH(s) may be predefined. A slot including PSFCH(s) may be referred to as a PSFCH slot. A condition for configuring a PSFCH slot in a licensed band may be different from a condition for configuring a PSFCH slot in an unlicensed band. An HARQ feedback transmission operation in a PSFCH slot of a licensed band may be different from an HARQ feedback transmission operation in a PSFCH slot of an unlicensed band. Configuration information of an SL channel actually transmitted in a transmission resource may be transmitted through signaling (e.g., RRC message, SCI). The configuration information of the SL channel may include frequency resource information (e.g., position of a frequency resource region), time resource information (e.g., position of a time resource region), and the like.

In an exemplary embodiment, OFDM symbols available for signal transmission within a slot of a basic transmission unit may be defined according to an SL start symbol (e.g., *sl-StartSymbol*) and an SL symbol length (e.g., *sl-LengthSymbols*). Here, when a sidelink is configured in an unlicensed band, a sub-slot with a time length smaller than a slot length or OFDMA symbols of an arbitrary length may be used as OFDM symbols for signal transmission. In an exemplary embodiment, OFDM symbols that can be used for signal transmission within a slot of a basic transmission unit may be defined according to an RRC message including *sl-LengthSymbols.* Alternatively, in another exemplary embodiment, related information may be included in SCI.

In case of sidelink subchannels, one subchannel may be configured with consecutive $N_{PRB4subchannel}$ PRB(s). Here, $N_{PRB4subchannel}$ may be defined by an RRC message or base station. The respective subchannels may be configured consecutively within the resource pool. When a sidelink is configured in an unlicensed band, a subchannel may be configured as a set of physically distributed PRBs. As an example, a subchannel may be configured with $N_{PRB4subchannel}$ PRB(s) at regular PRB intervals. In the present disclosure, a structure of the subchannel configured as a set of PRBs at regular intervals may be defined as an 'interlace subchannel'.

A base station may transmit configuration information (e.g., transmission resource information) of SL channel(s) to the terminal. The terminal may receive the configuration information of the SL channel(s) from the base station and transmit the SL channel(s) based on the configuration information (e.g., transmission resource(s) indicated by the configuration information). Alternatively, the terminal may select resource(s) by performing a resource sensing operation and/or a resource selection operation, and may transmit SL channel(s) on the selected resource(s). The selected resource(s) may mean transmission resource(s). A transmission resource may include one or more subchannels and one or more slots.

A transmitting terminal may transmit an SCI including transmission resource information (e.g., scheduling information) of a PSSCH to a receiving terminal. The transmission resource information may be allocation information of subchannel(s) and/or slot(s) of the PSSCH. The transmitting terminal may refer to a terminal that transmits the PSSCH (e.g., data). The receiving terminal may refer to a terminal that receives the PSSCH (e.g., data). The transmission resource information included in the SCI may indicate a transmission resource of the PSSCH in a slot where the SCI is transmitted. Alternatively, the transmission resource information included in the SCI may indicate a transmission resource of the PSSCH in a slot other than the slot where the SCI is transmitted.

In SL-U communication, a listen-before-talk (LBT) operation may be performed for coexistence with other communication nodes (e.g., communication devices). Actual transmission resource(s) may be determined based on a result of the LBT operation. A terminal may perform an LBT operation, and if the LBT operation is successful, the terminal may use a channel during a specific time (e.g., channel occupancy time (COT)). For example, if the LBT operation of the terminal is successful, a COT may be initiated by the terminal, and the terminal may perform communication (e.g., SL-U communication) during the COT. Depending on a specific condition, other terminals (e.g., terminals not initiating the COT) may perform communication (e.g., SL-U communication) during the COT. In other words, the COT may be shared with other terminal(s), and in this case, the other terminal(s) may perform communication within the shared COT.

A transmission unit (e.g., symbol configuration) within the COT may vary. Configuration information of a transmission unit within the COT may be transmitted through signaling (e.g., SCI). A symbol may refer to an OFDM symbol. In the exemplary embodiment of FIG. 9, a PSCCH and PSSCH may be configured together within a transmission resource. The PSCCH may be configured starting from a PRB with the lowest index in a subchannel with the lowest index among subchannel(s) configured for PSSCH transmission.

The number of OFDM symbols used for PSCCH configuration may be 2 or 3. In this case, a start position of the OFDM symbols used for PSCCH configuration may be defined as an index [SL start symbol (e.g., *sl-StartSymbol*) + 1].

Operations, procedures, control information, and/or configuration information for operating channel occupancy in SL-U communication will be described. An operating channel may refer to a frequency resource having a bandwidth of a predefined size. Resources (e.g., time resources, frequency resources, carriers, subcarriers, subchannels) of an unlicensed band may be occupied by a communication node belonging to a network (e.g., wireless local area network (WLAN)) other than a cellular network (e.g., 4G network, 5G network). Resources of an unlicensed band may be occupied by signals/channels transmitted and received between a base station and a terminal belonging to the cellular network. Resources of an unlicensed band may be occupied by signals/channels transmitted and received between terminals belonging to the cellular network.

In the present disclosure, a communication node (e.g., base station, terminal) transmitting a signal/channel may be expressed as a transmitting node, and a communication node (e.g., base station, terminal) receiving the signal/channel may be expressed as a receiving node. In an unlicensed band, communication nodes may share an operating channel. LBT operations may be performed to minimize interference between the communication nodes. The LBT operation may include an operation of checking whether the operating channel is occupied by another signal before transmitting a signal/channel. If the LBT operation is supported, a communication node (e.g., transmitting node) may perform a random backoff procedure.

If the LBT operation is successful, the communication node may occupy the operating channel. Occupation of the operating channel may be referred to as channel occupancy (CO). A terminal may secure a CO by performing an LBT operation. Configuration of the CO may vary depending on the type of LBT operation performed by the terminal. For example, the maximum length of CO may vary depending on the type of LBT operation performed by the terminal. The type of LBT operation performed by the terminal may vary depending on a priority class of data the terminal wishes to transmit within the CO.

The terminal may perform an LBT operation using different parameters (e.g., different LBT parameters) to obtain a CO corresponding to each priority class. When an LBT operation is performed according to a priority class, parameters that determine an execution time of the LBT operation may vary. In an LBT operation involving a random backoff procedure, the minimum and/or maximum size of a contention window (CW) may be set differently for each priority class. The terminal may select a random backoff counter within the CW and perform a random backoff procedure based on the selected random backoff counter.

A fixed time period during which the LBT operation is performed may be determined based on the type of LBT operation and/or LBT parameter(s). The length of the fixed time period may be 16 $\mu$s or 25 $\mu$s.

In the present disclosure, an LBT procedure that requires a random backoff procedure may be expressed as 'LBT-type-A'. In addition, the present disclosure may express an LBT procedure with a fixed time length of 25 $\mu$s as 'LBT-type-B'. In addition, the present disclosure may express an LBT procedure with a fixed time length of 16 $\mu$s as 'LBT-type-C'. As described above, the LBT-Type-A may have a CO configuration (in an exemplary embodiment, CO length) varying depending on the LBT type or LBT parameter(s). In addition, the LBT-Type-C may be defined as one of the LBT types, but it may mean that the terminal may not actually perform an LBT procedure and the terminal does not transmit signals/channels for a fixed time of 16 $\mu$s.

The communication node (e.g., transmitting node) that performed the LBT operation may transmit information on a CO (e.g., CO configuration information) secured by the LBT operation to another communication node (e.g., receiving node). The CO configuration information may include LBT parameter(s) used for the LBT operation of the terminal. The LBT parameter(s) may include information of the priority class. The CO configuration information may include at least one of information on a start time point of the CO, information on a length of the CO, or information on an end time point of the CO. In the present disclosure, a term 'time point' and a term 'time' may be used as having the same meaning.

The receiving node may receive the CO configuration information from the transmitting node and identify the LBT parameter(s) used for securing the CO based on the CO configuration information. The receiving node may identify the priority class for the CO initiated by the transmitting node based on the LBT parameter(s).

Additionally, a transmitting device may transmit information on a CO secured through an LBT procedure to a receiving device. The information on the CO (e.g., CO configuration information) may include one or more of information on a start time of the CO, information on a time length of the CO, and information on an end time of the CO. The receiving device may transmit a signal/channel at an arbitrary time within the CO using the indicated CO configuration information.

The transmitting device may configure a COT based on the LBT type of 'LBT-Type-A'. The COT may indicate time resources, frequency resources, or time-frequency resources. The COT may be referred to as a CO or channel occupancy resource (COR). Since time-frequency resources in an unlicensed band are shared with other communication nodes, the time-frequency resources may be used discontinuously by a specific communication node. Accordingly, signal/channel transmission in the unlicensed band may occur in form of discontinuous bursts. Here, a burst form may mean a transmission structure configured with one or more slots. In addition, a transmission structure configured with consecutive OFDM symbols, which has a length shorter than a slot length, may be included in the burst form. In sidelink communication, transmission resources may be configured continuously during the COT.

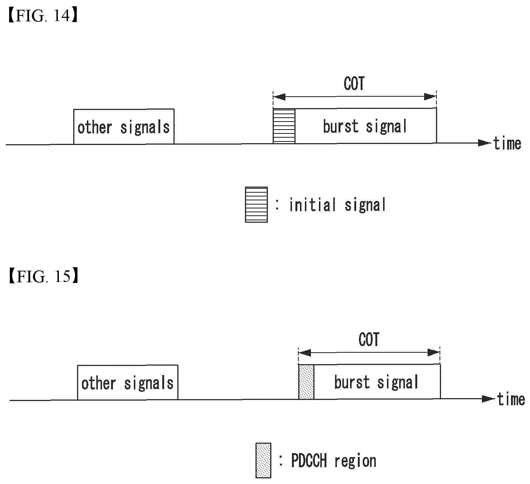

FIG. 14 is a conceptual diagram illustrating a first exemplary embodiment of a channel occupancy time in a communication system.

Referring to FIG. 14, the transmitting device may transmit an initial signal and/or a burst signal (e.g., PSSCH, PSFCH, PSCCH, reference signal) within the COT. Here, the initial signal may be a signal copied from the first symbol of sidelink transmission. Alternatively, the initial signal may be a signal configured as a cyclic prefix.

FIG. 15 is a conceptual diagram illustrating a second exemplary embodiment of a channel occupancy time in a communication system.

Referring to FIG. 15, the transmitting device may transmit a PSCCH and/or burst signal within the COT.

Hereinafter, the present disclosure will describe a method for allocating sidelink transmission resources and control information related to allocation. First, the present disclosure will describe resource allocation (RA), which is a sidelink transmission resource allocation method. Transmission resources for transmitting or receiving a signal/channel may be allocated to a sidelink terminal.

SL resources may be allocated based on a mode 1 or mode 2. The mode 1 may be referred to as a resource allocation (RA)-mode 1, and the mode 2 may be referred to as an RA-mode 2. When the RA-mode 1 is used, a base station may transmit DCI (e.g., SL grant) including SL resource allocation information to a terminal, and the terminal may perform SL communication using SL resource(s) allocated by the base station. When the RA-mode 2 is used, a terminal may perform a resource sensing operation within a resource pool, perform a resource selection operation for resources sensed by the resource sensing operation, and perform SL communication using resources selected by the resource selection operation.

In the RA-mode 1, when transmission data occurs, the terminal may transmit a scheduling request (SR) for the transmission data to the base station, and the base station may use a dynamic grant (DG) based on the SR of the terminal to allocate resources (e.g., SL resources) to the terminal. In the RA-mode 1, the base station may allocate periodic resources to the terminal in a semi-static manner, and the terminal may perform SL communication using the periodic resources allocated by the base station.

The periodic resources allocated in the semi-static manner may be configured grant (CG) resources. The base station may transmit allocation information of the CG resources to the terminal. The allocation information of the CG resources may include at least one of position information of the CG resources, time resource information of the CG resources, frequency resource information of the CG resources, or periodicity information of the CG resources. Depending on a release procedure or deactivation procedure of the CG resources, CG schemes may be classified into CG-Type 1 and CG-Type 2. In the CG-Type 1, the CG resources may be released by RRC signaling. In the CG-Type 2, the CG resources may be deactivated by DCI signaling.

In the RA-mode 2, the terminal may perform a resource sensing operation during a sensing window, select resource(s) that satisfy a predefined condition among resources sensed by the resource sensing operation, and transmit an SL signal/channel using the selected resource(s). The resource sensing/selection methods according to the RA-mode 2 may be classified into a dynamic scheme and a semi-static scheme. According to the semi-static scheme, specific time resource(s) may be occupied. The dynamic scheme and semi-static scheme may be distinguished depending on a time of selecting a new resource. When the dynamic scheme is used, the terminal select a resource for TB transmission every time it wants to transmit a new TB. The TB transmission may include new TB transmission (e.g., initial TB transmission) and/or TB retransmission. One or more resources (e.g., one or more transmission resources) may be used, occupied, and/or reserved for the TB transmission.

When the semi-static scheme is used, a counter value for TB transmission may be 0 during a specific time (e.g., resource reservation interval (RRI)). Alternatively, when the semi-static scheme is used, a new transmission resource may be selected under a specific condition. A counter value for TB transmission may be selected randomly. The selected counter value may be decreased by 1 when one TB transmission (e.g., new TB transmission and/or TB retransmission) is completed. When the semi-static scheme is used, the terminal may continue to occupy the selected resource during a specific time. In other words, the terminal may continue to use the selected resource during the specific time. The specific time may mean a time that the terminal can exclusively occupy. The specific time may be defined as RRI.

The base station may signal an RRI list to the terminal. The RRI list may include up to 16 RRIs (e.g., up to 16 RRI values). The signaling may be at least one of system information (SI) signaling, RRC signaling, MAC CE signaling, or PHY signaling. The terminal may receive the RRI list from the base station, select one RRI among the RRIs belonging to the RRI list, and use the selected resource (e.g., selected transmission resource) during the selected RRI. The terminal may occupy consecutive resources during the RRI. The consecutive resources may be configured in a logical resource region for SL.

A first terminal may transmit SCI including information of a selected RRI to a second terminal. The second terminal may receive the SCI from the first terminal and identify the RRI selected by the first terminal based on an information element included in the SCI. The second terminal may not select a resource (e.g., resource selected by the first terminal) during the RRI indicated by the SCI. Information on the resource selected by the first terminal may be included in the SCI.

When the RA-mode 2 is used, a resource sensing window and/or a resource selection window may be configured. The resource sensing window may be referred to as a sensing window (SSW), and the resource sensing operation may be performed within the SSW. The resource selection window may be referred to as a selection window (SLW), and the resource selection operation may be performed within the SLW. The resource used during the RRI (e.g., RRI value) indicated by the SCI may be identified by the resource sensing operation performed within the SSW.

The SCI may include scheduling information (e.g., scheduling information of the TB) and/or parameter(s) applied to transmission of the TB. The parameter(s) applied to transmission of the TB may be used for demodulation/decoding of the TB in the receiving terminal. The SCI may be classified into first-stage SCI (1st SCI) and second-stage SCI (2nd SCI). The first-stage SCI may be transmitted on a PSCCH, and the second-stage SCI may be transmitted on a PSSCH. The second-stage SCI may be associated with the first-stage SCI. The first-stage may include scheduling information for initial TB transmission and/or scheduling information for TB retransmission. The second-stage SCI may include at least one of information on a transmitting terminal of the PSSCH, information on a receiving terminal of the PSSCH, HARQ feedback information, or retransmission information.

Y transmission resources including a slot where the first-stage SCI is transmitted may be configured. Y may be a natural number. For example, Y may be 2 or 3. The first transmission resource among Y transmission resources may be configured in the slot where the first-stage SCI is transmitted. In other words, the first transmission resource among the Y transmission resources may be the slot where the first-stage SCI is transmitted. Slot(s) in which the remaining (Y-1) transmission resources are configured may be defined by slot offset(s). The slot offset may be a positive integer. The maximum value of the slot offset may be 32.

The scheduled first transmission resource may include $N_{subchannel}$ subchannels in the frequency domain. The first subchannel (e.g., start subchannel) among $N_{subchannel}$ subchannels may be a subchannel where the first-stage SCI is transmitted. $N_{subchannel}$ may be a natural number. $N_{subchannel}$ may be set to be equal to or less than the maximum number of subchannels set by higher layer signaling. The first-stage SCI may include frequency resource information of the second transmission resource (e.g., information of N subchannel(s), information of a start subchannel among the N subchannel(s)) and/or frequency resource information of the third transmission resource (e.g., information on N subchannel(s), information on a start subchannel among the N subchannel(s)). The number N of subchannels of the second transmission resource may be the same as the number $N_{subchannel}$ of subchannels of the first transmission resource. The number N of subchannels of the third transmission resource may be the same as the number $N_{subchannel}$ of subchannels of the first transmission resource. The first transmission resource among the Y transmission resources may be a transmission resource for the first TB transmission (e.g., initial TB transmission). The remaining (Y-1) transmission resource(s) may be transmission resource(s) for TB retransmission.

The first-stage SCI may include one or more information elements defined in Table 1 below.

[Table 1]

| Information elements |
|---|
| Priority: priority of data or information transmitted on a PSSCH |
| Frequency resource assignment: information on subchannels for two or three transmission resources |
| Time resource assignment: information on slot offset(s) for one or two additional transmission resources in addition to the first-stage SCI |
| Resource reservation period: time period during which the same resource is used |
| PSFCH overhead indication: information indicating whether to transmit a PSFCH. The receiving terminal may perform an operation of determining a TB size (TBS) and/or an operation of identifying resource elements (REs) used for PSSCH transmission based on the PSFCH overhead indication. |
| Second-stage SCI format: SCI format 2-A, SCI format 2-B, SCI format 2-C |
| DMRS pattern |
| Beta offset indicator |
| DMRS port number |
| MCS |
| Additional MCS table indicator |
| Conflict information receiver flag |
| Other information element(s) |

The second-stage 2 SCI may include one or more information elements. The information elements included in the second-stage SCI may vary depending on the format of the second-stage SCI. The second-stage SCI may include one or more information elements defined in Table 2 below.

[Table 2]

| Information elements |
|---|
| HARQ process number |
| New data indicator (NDI) |
| Redundancy version (RV) |
| Source ID |
| Destination ID |
| HARQ feedback enabled/disabled indicator |
| Cast type indicator |
| Other information element(s) |

Meanwhile, signal/channel configuration in the frequency-time domain or signal/channel configuration in the time domain of the transmission resource(s) allocated to or selected by the terminal may be as follows. As an exemplary embodiment, signal/channel configuration for a PSSCH for TB transmission may be consecutive OFDM symbols within the transmission resource. Hereinafter, 'symbol' may refer to 'OFDM symbol'. The terminal may configure and transmit the PSSCH with consecutive symbols within one slot period or transmission resource. The consecutive symbols may include a demodulation reference signal (DMRS) for signal demodulation. The terminal may not configure the PSSCH or may not transmit the PSSCH in symbol(s) that meet the following conditions. Here, the conditions may include one or more of the following conditions.

- The PSSCH cannot be configured or transmitted in symbol(s) other than symbols configured for sidelink.

  ◦ Here, symbols for sidelink may be defined according to an SL start symbol (e.g., *sl-StartSymbol*) and an SL symbol length (e.g., *sl-LengthSymbols*). Here, the SL start symbol may mean an index of the first symbol among consecutive symbols as long as the SL symbol length. Here, PSSCH allocation may start at a symbol indicated by an index (SL start symbol + 1). Here, a symbol for automatic gain control (AGC) may be configured at a position indicated by the SL start symbol. The symbol may be configured to the same symbol as the symbol indicated by the index (SL start symbol + 1).

- A PSFCH may be configured in an arbitrary slot. If a PSFCH is configured in an arbitrary slot, the PSSCH cannot be configured or transmitted in symbol(s) configured for the PSFCH. Here, the slot where the PSFCH is configured may be a slot configured periodically according to a PSFCH configuration periodicity (e.g., 1, 2, or 4). Here, the periodicity may be applied within a set of slots configured for sidelink.
- A PSFCH may be configured in an arbitrary slot. If a PSFCH is configured in an arbitrary slot, the PSSCH cannot be configured or transmitted in a symbol immediately preceding the symbol(s) configured for the PSFCH.
- The PSSCH cannot be configured or transmitted in the last symbol among symbols configured for sidelink.

In the above description, a symbol not included in the PSSCH configuration during the transmission resource or one slot period may be expressed as 'gap symbol' or 'gap OFDM symbol'. In addition, the sidelink may be a link between the terminals. Therefore, a received signal strength may vary depending on the positions of the transmitting terminal and the receiving terminal. Accordingly, AGC may be required to ensure that a signal is input to a receiver at an appropriate level depending on the received signal strength. The symbol for AGC may be included in the first symbol of PSCCH/PSSCH transmission. Additionally, a symbol for AGC may be configure at a symbol position before PSFCH transmission. In addition to the AGC symbol, a time required for transmission after signal reception may be configured as the 'gap symbol'. Therefore, the last symbol of the transmission or the last symbol of the slot may be configured as the gap symbol. In addition, even in the slot in which PSCCH/PSSCH symbols and PSFCH symbol are configured, the gap symbol may be configured after the last PSCCH/PSSCH symbol.

When a gap symbol is configured in sidelink transmission of an unlicensed band, a resource may be occupied by another device in the unlicensed band if a time of the gap symbol is longer than a predetermined time length. Therefore, when using physically consecutive resources in an unlicensed band, the gap symbol may not be configured. Further, a certain number of samples of the preceding symbol may be copied and configured as a cyclic prefix so that the gap symbol is configured to have a length smaller than one symbol length. Alternatively, a certain number of samples of the following symbol may be copied and configured as a cyclic postfix so that the gap symbol is configured to have a length smaller than one symbol length.

The length of the cyclic prefix may be a predefined value. Alternatively, the length of the cyclic prefix may be a value specified by SCI. When transmitting using temporally consecutive slots, the terminal may transmit a cyclic prefix of the first symbol of the slot following the previously-transmitted slot by advancing it by a defined length without indication from SCI.

Meanwhile, the PSFCH may be configured periodically within the SL resource region. The slot in which the PSFCH is configured may be referred to as a PSFCH slot. The PSFCH slot may be configured according to a periodicity. The periodicity of the PSFCH slot may be referred to as a PSFCH transmission occasion resource (PSFCH TPR). The PSFCH TRP may be configured as 1 slot, 2 slots, or 4 slots. PRB(s) capable of PSFCH transmission in the frequency domain may be indicated by a bitmap. In case when PSFCH transmission is configured with a common PSFCH resource (or common PSFCH set) and/or dedicated PSFCH resource (or dedicated PSFCH set), PRB(s) used for the dedicated PSFCH resource (or dedicated PSFCH set) may be indicated by a bitmap. PRBs available for PSFCH transmission may be all PRBs or some PRBs. One PSFCH may be transmitted in one PRB. Alternatively, in an unlicensed band, one PSFCH may be transmitted on one or more PRBs.

The PRB(s) in which the PSFCH is transmitted may be determined based on a position of a slot where a PSSCH associated with the PSFCH is received. A difference (e.g., slot offset, interval) between the slot where the PSSCH is received and the slot where the PSFCH is to be transmitted may be considered. For example, the PSFCH may be transmitted in the first PSFCH slot after K slot(s) from a slot n where the PSSCH is received. A PRB index (e.g., index of the PRB where the PSFCH is transmitted) may be defined based on a function $f(P_{PSFCH}, n, K, k_{subch})$. $P_{PSFCH}$ may be the periodicity of PSFCH. n may be the index of the slot where the PSSCH is received. K may be a slot offset used to determine the PSFCH slot where the PSFCH is transmitted. $k_{subch}$ may be an index of the subchannel where the PSCCH is configured. In an unlicensed band, a set of interlace PRBs may enable X PRBs. In this case, the number of sets of interlace PRBs may be 10 or less.

In the function f(.) for determining the PRB index, at least one of a different code q, identifier (ID) of the transmitting terminal, or ID of the receiving terminal transmitting the PSFCH may be considered. The code q may be defined by a cyclic shift or a cyclic shift pair. The cyclic shifts may be related to different Zadoff-Chu sequences. The cyclic shift pair may refer to a pair of different sequences according to acknowledgment (ACK) or negative ACK (NACK).

A PRB set for PSFCH transmission may be determined based on the slot n where the PSSCH is transmitted and/or the index of the subchannel where the PSSCH is transmitted. A PRB in the PRB set and a code carried by the PSFCH may be determined based on the function that considers at least one of the ID of the transmitting terminal or the ID of the receiving terminal transmitting the PSFCH.

The terminal receiving the PSSCH may transmit the PSFCH according to a specified condition. An example of the specified condition may be a case when the PSSCH is transmitted in the unicast mode and HARQ feedback is enabled. Alternatively, an example of the specified condition may be a case when the PSSCH is transmitted in the groupcast and/or broadcast transmission mode, and HARQ feedback is enabled. Here, as an HARQ feedback for the PSSCH transmitted in the groupcast and/or broadcast mode, only NACK may be transmitted based on the NACK-only scheme. The terminal may be configured with a PSFCH TPR from the resource pool. Configuration information may include one or more of the information described below.

- Information of a periodicity of a PSFCH TRP in a sidelink resource pool.

As an exemplary embodiment, the periodicity of the PSFCH TRP may be 1 slot, 2 slots, or 4 slots.

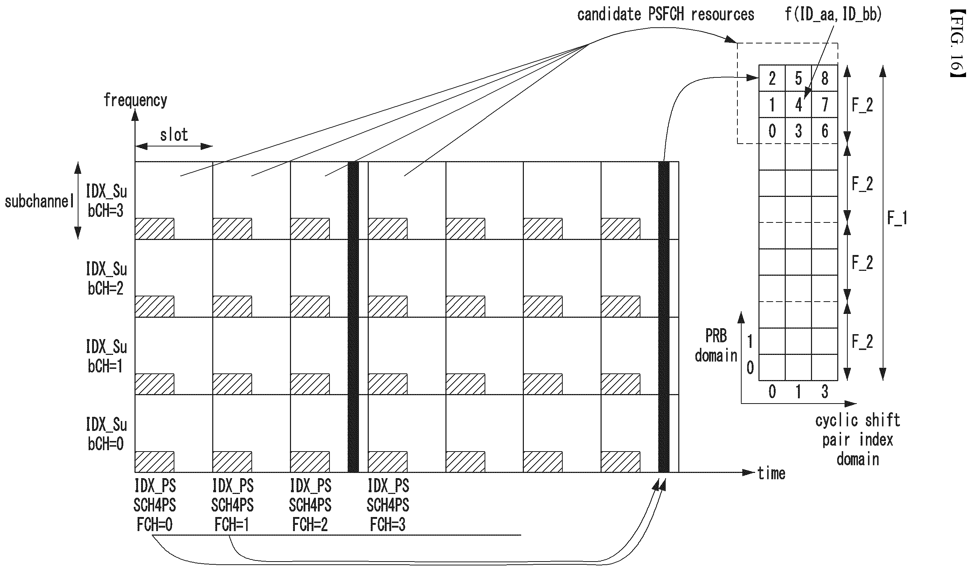

FIG. 16 is a conceptual diagram illustrating a first exemplary embodiment of PSFCH resources in a communication system.

Referring to FIG. 16, a PSFCH transmission periodicity in an licensed band may be 4 slots. In addition, an HARQ feedback timing (i.e., K_HARQ) for a PSSCH may be 3 slots. The total number of subchannels may be 4. The number N_PSFCH_PRB_Set of PRB sets (PRBs or PRB sets) constituting PSFCH resources may be 12.

In this regard, a PSFCH resource for PSFCH transmission according to the PSFCH TPR may be defined as PRB(s) and/or cyclic shift(s) (CS(s)). Alternatively, a PSFCH resource for PSFCH transmission according to the PSFCH TPR may be defined as a combination of PRB(s) and/or CS(s). Hereinafter, the present disclosure will make description assuming a combination of PRB(s) and CS(s). The terminal may receive information on the number (i.e., N_PSFCH_PRB_Set) of PRB sets (PRBs or PRB sets) constituting PSFCH resources from the network or base station. In FIG. 16, as an exemplary embodiment, the number N_PSFCH_PRB_Set of the PRB sets (PRBs or PRB sets) constituting PSFCH resources may be 'F_1'.

In addition, the terminal may receive information on the number of cyclic shifts constituting PSFCH resources (i.e., N_PSFCH_CS) from the network or base station. In addition, the terminal may receive information on the type of PSFCH from the network or base station. Accordingly, the terminal may consider only one sidelink subchannel in PSFCH resource configuration depending on the type of PSFCH. Alternatively, the terminal may consider all the numbers of subchannels in the PSFCH resource configuration according to the type of PSFCH. The terminal may determine the size of the PSFCH resource by considering at least one of N_PSFCH_PRB_Set, PSFCH TRP periodicity information, type of PSFCH, or N_PSFCH_CS. N_PSFCH_PRB_Set PRB sets constituting PSFCH resources may be divided according to the PSFCH TPR periodicity information and/or number of subchannels to form a detailed PRB set constituting a detailed PSFCH resource. As an exemplary embodiment, in FIG. 16, a transmission periodicity of the PSFCH TRP may be F_2.

Therefore, the detailed PSFCH resource to be used by the terminal may be defined as a different resource depending on the subchannel. As an exemplary embodiment, in FIG. 16, the detailed PSFCH resource to be used by the terminal may belong to a dotted line box of 'candidate PSFCH resources (or candidate PSFCH set)'. Here, the present disclosure will make description by defining a resource corresponding to a subchannel of the PSSCH as a detailed PSFCH resource. The size of the detailed PSFCH resource corresponding to the PSSCH may be defined by at least one of the PSFCH type, PSFCH transmission periodicity, number of subchannels, or N_PSFCH_CS. The index or configuration position of the detailed PSFCH resource corresponding to the PSSCH may be defined according to an index of a subchannel where the PSSCH is transmitted (i.e., PSSCH transmission subchannel index). As an exemplary embodiment, in FIG. 16, the index or configuration position of the detailed PSFCH resource corresponding to the PSSCH may be defined according to the PSSCH transmission subchannel index (IDX_SubCh).

In the detailed PSFCH resource, one PSFCH may be transmitted in a unit PSFCH resource. The unit PSFCH resource may be defined as one PRB and one cyclic shift pair. An index of the unit PSFCH resource may first increase according to a PRB index within the detailed PSFCH resource. Thereafter, when the index of the unit PSFCH resource reaches the PRB size of the detailed PSFCH resource, it may be increased according to the cyclic shift pair index.

The terminal may calculate the index of the unit PSFCH resource for transmitting the PSFCH. Alternatively, the terminal may identify the index of the unit PSFCH resource for transmitting the PSFCH. When determining the index of the unit PSFCH resource through which the terminal will transmit the PSFCH, a PSSCH slot index (IDX_PSSCH4PSFCH) associated with the PSFCH slot may be considered. The terminal may define the PSSCH slot index associated with the PSFCH slot by defining a slot preceding the PSFCH slot by a slot gap according to the PSFCH TRP as an index 0 and defining that the PSSCH slot index increases by 1 from the index 0. Here, the terminal may derive the slot gap from information on the HARQ feedback timing (K_HARQ) for the PSSCH included in the SCI. As an exemplary embodiment, in FIG. 16, the PSSCH slot index (IDX_PSSCH4PSFCH) associated with the PSFCH slot may be 0, 1, 2, 3, or the like.

In addition, when determining the index of the unit PSFCH resource through which the terminal will transmit the PSFCH, the ID of the terminal transmitting the PSSCH and/or the ID of the terminal transmitting the PSFCH may be considered together. As an exemplary embodiment, the ID of the terminal transmitting the PSSCH in FIG. 16 may be ID_aa. Further, in FIG. 16, the ID of the terminal transmitting the PSFCH may be ID_bb.

As an exemplary embodiment, the terminal may determine the index of the unit PSFCH resource for transmitting the PSFCH as a value obtained by performing a modulo operation on a sum of the ID of the terminal transmitting the PSSCH and the ID of the terminal transmitting the PSFCH by the size of the detailed PSFCH resource. As an exemplary embodiment, in FIG. 16, f(ID_aa, ID_bb) may be 4. The terminal determine the PSFCH resource in which to transmit the PSFCH using the determined index of the unit PSFCH resource. Additionally, information used to generate a Zadoff-Chu sequence constituting the PSFCH may be defined according to a cyclic shift pair index corresponding to the determined unit PSFCH resource index. The present disclosure will describe a PSFCH sequence generation factor. Here, the PSFCH sequence generation factor may be defined as one or more factors. In an exemplary embodiment, when the PSFCH sequence generation factor is defined according to a unit PSFCH resource index or cyclic shift pair index, it may be defined as 'PSFCH sequence generation factor_A'. Alternatively, in an exemplary embodiment, when the PSFCH sequence generation factor is defined according to whether HARQ feedback is ACK or NACK, it may be defined as 'PSFCH sequence generation factor_B'.

Meanwhile, when the sidelink is configured in an unlicensed band, the PSFCH may be configured as described later. A condition of occupancy equal to or greater than a predetermined ratio in an operating bandwidth or occupied bandwidth may be required for signal transmission in the unlicensed band. Accordingly, the detailed PSFCH resource may be configured in an interlace structure. Here, the PSFCH may be transmitted in one or more PRBs.

Meanwhile, in case of a PSFCH having an interlace structure, as an exemplary embodiment, one PSFCH may be transmitted using the same sequence in a plurality of interlace PRBs of a detailed PSFCH resource. As another exemplary embodiment, a sequence of one PSFCH may be transmitted in the plurality of PRBs as a sequence having a length corresponding the number of REs of each of the plurality of PRBs. In another exemplary embodiment, the value of N_PSFCH_CS (i.e., the number of cyclic shifts constituting the PSFCH resources) may be increased in the unlicensed band sidelink. In other words, the number of indexes in the code domain may increase. In this case, the number of PRBs in the interlace structure may be considered as a unit resource when configuring the existing detailed PSFCH resource.

Referring to FIG. 16, in candidate PSFCH resources, one PRB may be considered as a unit of one PSFCH resource, and may be mapped to one PSFCH resource index. In an exemplary embodiment, a PRB-domain basic unit of a PSFCH resource in the candidate PSFCH resources in the unlicensed band may be a set of PRBs constituting one subchannel of the interlace structure.

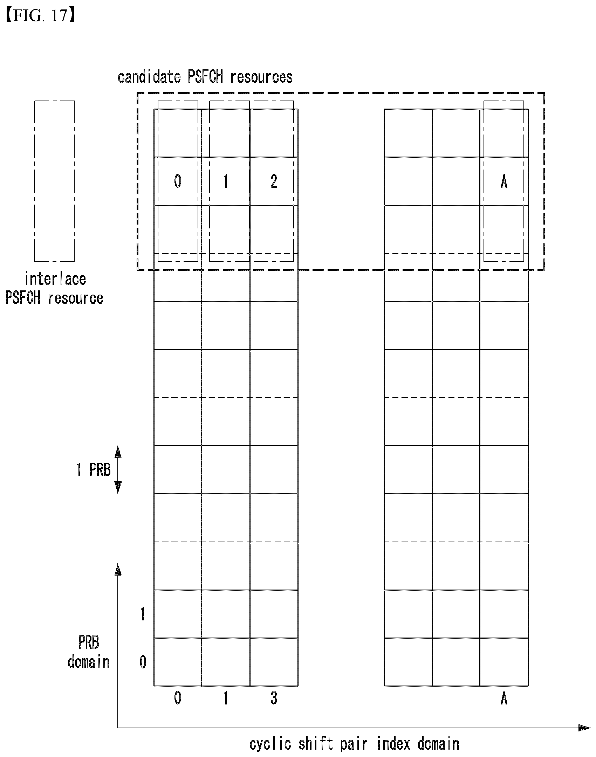

FIG. 17 is a conceptual diagram illustrating a second exemplary embodiment of PSFCH resources in a communication system.

Referring to FIG. 17, a PSFCH resource of an interlace structure in an unlicensed band may be composed of three interlaced PSFCH resources and one cyclic shift pair index (CSPI). In an exemplary embodiment, the terminal may define the size of the detailed PSFCH resource by the PSFCH type, PSFCH transmission periodicity, number of subchannels, N_PSFCH_CS, interlace PSFCH structure, and the like. As an example, the number of PRBs configurable as the detailed PSFCH resource may be $M^{PSFCH}_{subch,slot}$. The number of available PRBs constituting the PSFCH may be N_PSFCH_PRB_Set. The number of PRBs constituting one interlace structure may be N_Interlace_PRB. $M^{PSFCH}_{subch,slot}$ may be defined by Equation 1 below.

[Equation 1]

$$M^{PSFCH}_{subch,slot} = (\text{N\_PSFCH\_PRB\_Set}/\text{N\_Interlace\_PRB})/(\text{'PSFCH transmission periodicity'} \times \text{'number of subchannels'})$$

In configuring the PSFCH resource in the unlicensed band, a value configurable as N_PSFCH_CS may be defined differently depending on a subcarrier spacing (SCS). As an exemplary embodiment, in case of 15 kHz SCS, 10 may be configurable as N_PSFCH_CS. In this case, one or more of 1, 2, 3, 6, 10, 20 (=2×10), and 30 (=3×10) may be configurable as N_PSFCH_CS. As an exemplary embodiment, in case of 30 kHz SCS, 5 may be configurable as N_PSFCH_CS. In this case, one or more of 1, 2, 3, 6, 5, 10 (=2×5), 15 (=3×5), and 20 (=4×5) may be configurable as N_PSFCH_CS. The configuration of CSPI may be defined according to the value of N_PSFCH_CS. As an exemplary embodiment, when the value of N_PSFCH_CS includes 1, 2, 3, 6, and 10, the CSPI value mo may be defined as shown in Table 3 below. The CSPI value may be included or considered in sequence generation for PSFCH transmission.

[Table 3]

| $N_{CS}^{PSFCH}$ | $m_0$ (CSPI values) | | | | | | | | | |
|---|---|---|---|---|---|---|---|---|---|---|
| | CSPI 0 | CSPI 1 | CSPI 2 | CSPI 3 | CSPI 4 | CSPI 5 | CSPI 6 | CSPI 7 | CSPI 8 | CSPI 9 |
| 1 | 0 | - | - | - | - | - | - | - | - | - |
| 2 | 0 | 3 | - | - | - | - | - | - | - | - |
| 3 | 0 | 2 | 4 | - | - | - | - | - | - | - |
| 6 | 0 | 1 | 2 | 3 | 4 | 5 | - | - | - | - |
| 10 | 0 | 2 | 4 | 6 | 8 | 1 | 3 | 5 | 7 | 9 |

Alternatively, when N_PSFCH_CS value is 1, 2, 3, or 6, the value of N_PSFCH_CS may be defined by including a variable considering SCS. Alternatively, CSPI may be defined. As an exemplary embodiment, $\mu$ may be 0, 1, and 2 depending on the SCS of 15kHz, 30kHz, and 60kHz, respectively. In this case, a variable $\Delta_\mu$ may be defined as 10, 5, or 3. In this case, the effective number of CSPI in the unlicensed band may be up to N_PSFCH_CS$\times\Delta_\mu$. That is, N_PSFCH_CS may be 3, and when SCS=30kHz, a total of 15 CSPIs may be possible from index 0 to 14. Here, $m_0^\mu$ may be defined as Equations 2 and 3 below using the existing $m_0$ value.

[Equation 2]

$$m_0^\mu = (m_0 + \Delta_\mu), (m_0 + \Delta_\mu) < (N_{CPPI} * \Delta_\mu)$$

[Equation 3]

$$m_0^\mu = (m_0 + \Delta_\mu) mod(N_{CPPI} * \Delta_\mu - 1), (m_0 + \Delta_\mu) \geq (N_{CPPI} * \Delta_\mu)$$

Here, $N_{CPPI}$ may mean the number of CSPIs when N_PSFCH_CS value is 1, 2, 3, or 6. Afterwards, $m_0$ applied to generate the sequence may have an $m\mu o$ value of $m_0$ in the unlicensed band. In the same manner as $m_O$ value determination and method, $m_0^\mu$ may be determined using N_PSFCH_CS and the CSPI index.

Meanwhile, in relation to PSFCH resource determination, the terminal may determine CSPI by considering the ID of the terminal transmitting the PSSCH and/or the ID of the terminal transmitting the PSFCH. Additionally, as an exemplary embodiment, an index of a PSSCH-PSFCH transmission group according to the PSFCH transmission periodicity may be considered.

Here, the 'PSSCH-PSFCH transmission group' may be a group obtained by grouping a predetermined number of PSSCH slots and one PSFCH slot according to the PSSCH slots. As an exemplary embodiment, referring to FIG. 16, the PSSCH-PSFCH transmission group may mean that slots with IDX_PSSCH4PSFCH values of 0, 1, 2, and 3 are grouped into one group.

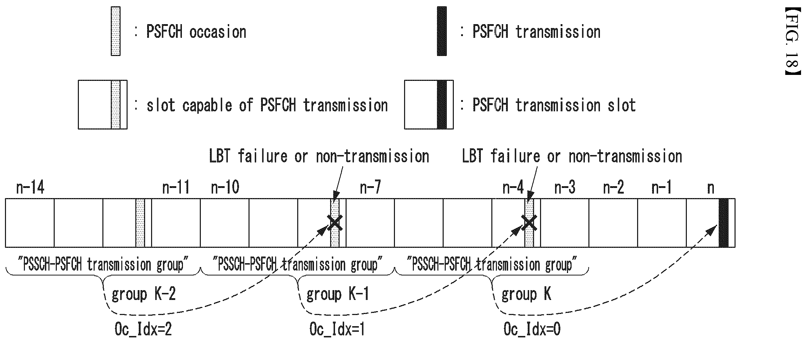

FIG. 18 is a conceptual diagram illustrating a first exemplary embodiment of a PSSCH-PSFCH transmission group and a method for indicating a PSFCH transmission LBT failure or non-transmission of PSFCH.

Referring to FIG. 18, each of three PSSCH-PSFCH transmission groups may be mapped to a slot capable of PSFCH transmission. The terminal may transmit HARQ response information for PSSCH(s) of slot(s) belonging to a PSSCH-PSFCH transmission group K or conflict information for 'reserved resources' in a PSFCH transmission resource of the n-th slot. However, in a case where an LBT operation is required for PSFCH transmission, PSFCH transmission may be impossible due to an LBT failure. Alternatively, the terminal may be indicated not to transmit a PSFCH even in a slot (or PSFCH occasion) in which PSFCH resources are configured. In an exemplary embodiment, a terminal that has indicated COT sharing may perform an LBT procedure, and may not transmit PSFCH(s) in some PSFCH occasions during the COT. The indication of not transmitting PSFCH(s) during the COT (e.g., noTxPSFCH) will be described in more detail in the dynamic allocation scheme.

Referring to FIG. 18, PSFCH transmission may fail in the slots (n-8) and (n-4) for a group K-2 and a group K-1. Alternatively, PSFCH transmission may not be performed in the slots (n-8) and (n-4) for the group K-2 and group K-1. In this case, the terminal may transmit the PSFCH by including it in the n-th PSFCH resource in the slots (n-8) and (n-4). For the purpose of describing an exemplary embodiment, an index for each group temporally preceding the PSFCH of the n-th slot may be defined as 'Oc_Idx'. In this case, an index for the group K may be 0, and an index for the group K-1 may be 1. The indexes of the groups may be considered in determining CSPI. Alternatively, the value of 'Oc_Idx' may be defined in relation to N PSFCH transmission occasions for one PSCCH/PSSCH transmission.

Here, the present disclosure will describe resource configuration of PSFCH transmission for the group(s) preceding the group K or a method of determining PSFCH resource indexes therefor. It may be assumed that the number of resources available for PSFCH transmission is $R^{PSFCH}_{PRB,CS}$ or $R^{PSFCH}_{InterlacePRB,CS}$. Here, $R^{PSFCH}_{InterlacePRB,CS}$ may mean one or more PRBs through which a sequence for one PSFCH is transmitted in an interlace structure. Here, in determining PSFCH resources for PSFCH transmission, CSPI may be calculated as shown in Equation 4 or Equation 5 below. Here, 'mod' may mean a modulo operation.

[Equation 4]

$$CSPI = (\text{'ID of terminal transmitting PSSCH'} + \text{'ID of terminal transmitting PSFCH'} + \text{'Oc\_Idx'}) \bmod R^{PSFCH}_{PRB,CS}$$

[Equation 5]

$$CSPI = (\text{'ID of terminal transmitting PSSCH'} + \text{'ID of terminal transmitting PSFCH'} + \text{'Oc\_Idx'}) \bmod R^{PSFCH}_{InterlacePRB,CS}$$

In the above, if the ID of the PSCCH-transmitting terminal is $P_{ID}$ and the ID of the PSFCH-transmitting terminal (i.e., ID of the terminal transmitting the PSFCH) is $M_{ID}$, the index determination of the PSFCH resource may be defined as in Equation 6 or Equation 7 below.

[Equation 6]

$$(P_{ID} + M_{ID} + Oc\_Idx) \bmod R^{PSFCH}_{PRB,CS}$$

[Equation 7]

$$(P_{ID} + M_{ID} + Oc\_Idx) \bmod R^{PSFCH}_{InterlacePRB,CS}$$

The above description may be made assuming that the PSFCH is for an HARQ response to the PSSCH. The PSFCH resource may be used to deliver conflict information for 'reserved resource'. The reserved resource may mean a PSSCH/PSCCH resource designated by the terminal using SCI. Therefore, a method for determining a PSFCH resource and a resource index therefor for transmitting conflict information for the reserved resource may be described in the same manner as the above-described method for determining a PSFCH resource and a resource index therefor for an HARQ responses to a PSSCH. Therefore, hereinafter, PSFCH transmission will be described by taking the HARQ response to PSSCH reception as an example, but it may be equally applied to transmission of conflict information for the reserved resource.

Further, the present disclosure will describe a common PSFCH resource (or common PSFCH set) and/or dedicated PSFCH resource (or dedicated PSFCH set) among all resources for PSFCH transmission. Each of the common PSFCH resource (or common PSFCH set) and/or dedicated PSFCH resource (or dedicated PSFCH set) may be composed of one or more PRB(s). Here, the common PSFCH resource (or common PSFCH set) may be composed of C PRBs, and the dedicated PSFCH resource (or dedicated PSFCH set) may be composed of D PRBs. C and/or D may be the number of PRB units. Alternatively, C and/or D may be the number of interlace units. In this case, C and/or D may be natural numbers. When C and/or D is the number of interlace units, the common PSFCH resource (or common PSFCH set) and/or dedicated PSFCH resource (or dedicated PSFCH set) are each configured as a PSFCH resource in an interlace structure. In an exemplary embodiment, the common PSFCH resource (or common PSFCH set) may mean PRB(s) commonly used by a plurality of terminals for PSFCH transmission. PRB(s) that can be used as the dedicated PSFCH resource (or dedicated PSFCH set) may be indicated by a bitmap. The terminal may use D PRBs designated by the bitmap in one interlace of one RB set as one dedicated PSFCH resource (or dedicated PSFCH set).

The followings are exemplary embodiments of PSFCH transmission resource configurations of the common PSFCH resource (or common PSFCH set) and/or dedicated PSFCH resource (or dedicated PSFCH set). In each exemplary embodiment, a PSFCH transmission resource may be configured with one or more combinations of configuration conditions.

Configuration condition 1) A PSFCH transmission resource may be configured as a common PSFCH resource (or, common PSFCH set) consisting of one interlace and a dedicated PSFCH resource (or, dedicated PSFCH set) consisting of X PRB(s).

Configuration condition 2) A PSFCH transmission resource may be configured as one interlace. Here, among PRBs constituting one interlace, Y PRB(s) may be configured as a dedicated PSFCH resource (or dedicated PSFCH set), and the other PRB(s) may be configured as a common PSFCH resource (or common PSFCH set). Here, the PRB(s) of the common PSFCH resource (or common PSFCH set) may be considered to have a common cyclic shift. Here, a PRB-unit or PRB-level cyclic shift may be applied.

Configuration condition 3) A dedicated PSFCH resource (or dedicated PSFCH set) may be configured as one interlace.

Configuration condition 4) A dedicated PSFCH resource (or dedicated PSFCH set) may be configured as one interlace, and a PRB-level cyclic shift may be applied. Here, the cyclic shift may be hopped according to a slot.

Configuration condition 5) A PSFCH resource may be composed of (A+B) PRB(s). In this case, A PRB(s) may be configured as a dedicated PSFCH resource (or dedicated PSFCH set), and B PRB(s) may be configured as a common PSFCH resource (or common PSFCH set). Here, B PRB(s) may be configured in a portion of the lowest PRB index and a portion of the highest PRB index in the frequency domain of one RB set.

In the common PSFCH resource (or common PSFCH set), PRB(s), interlace, index(es) of the PRB(s), and interlace index may be defined according to slot(s) and/or subchannel(s) through which the PSSCH is received. The terminal may receive information on the slot(s), subchannel(s), common PSFCH resource (set), and the like from the base station. In an exemplary embodiment, the common PSFCH resource (or common PSFCH set) received from the base station may be used for PSFCH transmission for all received PSSCHs for which HARQ responses are requested during a certain time period. As another exemplary embodiment, arbitrary PRBs in the PSFCH resource used to transmit conflict information for the reserved resource may be configured as a common PSFCH resource (or common PSFCH set).

As another expression, the common PSFCH resource (or common PSFCH set) may refer to a resource of PRBs commonly used by each PSFCH transmission (or all PSFCH transmissions), and may mean a resource in which some PRB(s) are commonly used. As an exemplary embodiment, a PRB index with the smallest value and a PRB index with the largest value in the resource pool may be included in the PSFCH resource configuration for all PSFCH transmissions. In an exemplary embodiment, one of the PSFCH resources in the interlace structure may be configured as the common PSFCH resource (or common PSFCH set). In other words, a plurality of PRBs constituting the interlace structure PSFCH resource may become the common PSFCH resource (or common PSFCH set).

Another exemplary embodiment of configuration of the common PSFCH resource (or common PSFCH set) may be the first index (index = 0) subchannel of the interlace structure subchannels. Alternatively, it may be an interlace subchannel with a middle index among configurable interlace subchannel indexes within the RB set. Here, the RB set may refer to a set of PRBs that constitute an LBT bandwidth in the sidelink resource pool. Here, the middle index may be determined as floor(N/2), floor(N/2)+1, or floor(N/2)-1 among the N interlace subchannels configurable in the RB set. Alternatively, it may be the last index subchannel in the interlace structure, or it may be a subchannel with a smaller number of PRBs constituting the subchannel than other subchannels. This is because if the number of PRBs forming a resource set is not a multiple of the number of PRBs that form an interlace structure subchannel, the number of PRBs in the subchannel that can include the last subchannel index may be small compared to other subchannels.

In another exemplary embodiment, a higher layer message may define whether to configure the common PSFCH, how to configure the common PSFCH, and position of the common PSFCH resource in one interlace structure subchannel. Here, one interlace subchannel for each RB set may be defined for each RB set as a common PSFCH resource. Here, PRBs used as one interlace subchannel of the common PSFCH resource may not be included in possible physical PRBs or the number of the PRBs when determining the dedicated PSFCH resource. As another exemplary embodiment, some subcarriers or resource elements of PRBs used as one interlace subchannel of the common PSFCH resource may be zero power (ZP) or null subcarriers or null REs. Here, the number of ZP or null REs may be X subcarriers or REs at both ends of each PRB. In this case, X may be a value of 0, 1, or 2. The value of X may be predefined or specified by a higher layer message.

Further, the present disclosure will describe a signal/channel or information delivered using the common PSFCH resource (or common PSFCH set). A different sequence generated using parameters selected for PSFCH sequence configuration may be transmitted in the common PSFCH resource (or common PSFCH set). Alternatively, the same sequence or signal as the PSFCH for PSFCH transmission may be transmitted in the common PSFCH resources (or common PSFCH set). Alternatively, a part of a PSFCH sequence or signal for PSFCH transmission may be transmitted in the common PSFCH resources (or common PSFCH set). Alternatively, a sequence generated considering the total number of RPBs of the common PSFCH resource (or common PSFCH set) and the dedicated PSFCH resource (or dedicated PSFCH set) may be transmitted in the common PSFCH resource (or common PSFCH set). In another exemplary embodiment, all terminals wishing to transmit PSFCHs may transmit the same sequence or signal in the common PSFCH resource (or common PSFCH set). In another exemplary embodiment, each of all terminals wishing to transmit PSFCHs may transmit a sequence or signal generated by considering information of each terminal in the common PSFCH resource (or common PSFCH set). In another exemplary embodiment, a different sequence or signal may be transmitted for each RB set. Here, RB set index information, cell index, common PSFCH resource interlace subchannel information, common PSFCH resource interlace subchannel index, and information used for S-SSB may be transmitted in the common PSFCH resource (or common PSFCH set).

Here, the length of the sequence may be determined by considering the number of subcarriers of one PRB of the common PSFCH resource (or common PSFCH set). Alternatively, the length of the sequence may be determined considering the number of subcarriers of multiple PRBs. As an example, the multiple PRBs may be PRBs constituting an interlace structure.

The dedicated PSFCH resource (or dedicated PSFCH set) may mean a resource used by the terminal for PSFCH transmission corresponding to an arbitrary PSSCH. Alternatively, the dedicated PSFCH resource (or dedicated PSFCH set) may mean a resource used for PSFCH transmission to deliver conflict information for an arbitrary reserved resource.

In a case where a common PSFCH resource (or common PSFCH set) and a dedicated PSFCH resource (or dedicated PSFCH set) are configured simultaneously in a PSFCH transmission slot or symbol, PRBs for the common PSFCH resource (or common PSFCH set) may not be included in determining a PSFCH resource index in the dedicated PSFCH resource (or dedicated PSFCH set). As an exemplary embodiment, the terminal may receive information on PRBs for configuring the dedicated PSFCH resource (or dedicated PSFCH set) from the base station as sl-PSFCH-RB-Set. Here, the information on PRBs may include position(s) of PRBs for configuring the dedicated PSFCH resource (or dedicated PSFCH set). Alternatively, the information on PRBs may include the number of PRBs for configuring the dedicated PSFCH resource (or dedicated PSFCH set). In this case, the position of PRBs for configuring the dedicated PSFCH resource (or dedicated PSFCH set) may be predefined in the technical specification. Alternatively, the position of PRBs for configuring the dedicated PSFCH resource (or dedicated PSFCH set) may be received from the base station in advance through an RRC message or the like. Alternatively, the position of PRBs for configuring the dedicated PSFCH resource (or dedicated PSFCH set) may be received from the base station through SCI. Alternatively, the position of PRBs for configuring the dedicated PSFCH resource (or dedicated PSFCH set) may be defined as an arbitrary resource set of an interlace structure.

As another way of expressing the above description, sl-PSFCH-RB-Set may include information on PRBs for configuring the common PSFCH resource (or common PSFCH set). Here, the information on PRBs may include the position of PRBs for configuring the common PSFCH resource (or common PSFCH set). Alternatively, the information on PRBs may include the number of PRBs for configuring the common PSFCH resource (or common PSFCH set).

The position of PRBs for configuring the common PSFCH resource (or common PSFCH set) may be predefined in the technical specification. Alternatively, the position of PRBs for configuring the common PSFCH resources (or common PSFCH set) may be received from the base station in advance through an RRC message or the like. Alternatively, the position of PRBs for configuring the common PSFCH resource (or common PSFCH set) may be received from the base station through SCI. Alternatively, the position of PRBs for configuring the common PSFCH resource (or common PSFCH set) may be defined as an arbitrary resource set of an interlace structure.

The terminal may use the above information to configure a PSFCH resource and detailed PSFCH resource of the dedicated PSFCH resource (or, dedicated PSFCH set) with PRBs excluding the PRBs for the common PSFCH resource (or common PSFCH set). Here, a method of configuring the detailed PSFCH resource or determining the PSFCH resource index (index in the dedicated PSFCH resource (or dedicated PSFCH set)) may follow the method described above.

A method of configuring a PSFCH resource within one RB set may be as follows. First, one interlace subchannel may be designated as the common PSFCH resource. Here, the method of configuring the common PSFCH resource may be one of the above-described methods of configuring the common PSFCH resource with one interlace subchannel.

Then, the dedicated PSFCH resource may be configured with PRBs of the remaining interlace subchannels excluding the used interlace subchannel. Here, the dedicated PSFCH resource may be configured according to the number M of unit PRBs. Here, the value of M may be 1, 2, or 5. Additionally, for M greater than 1, M PRBs among PRBs constituting the same interlace subchannel may be configured as one dedicated PSFCH resource. The value of M may be specified through a higher layer message.

The number of available resources for the dedicated PSFCH resource may be determined by considering the remaining number of interlace subchannels (N_R_IntSch), M, N_PSFCH_CS, PSFCH_TRP, and N_C_PSFCH. Here, N_C_PSFCH may be N PSFCH transmission occasions for one PSCCH/PSSCH. Here, N may be one of the values 1, 2, 3, or 4. The value of N may be specified by a higher layer message according to the RB set. Depending on N, one RB set may be divided into N different sets so that a resource for PSFCH transmission correspond to N occasions. The terminal receiving one PSCCH/PSSCH may have occasions to transmit a PSFCH up to N times according to LBT results. In an exemplary embodiment, the number of configurable resources of the dedicated PSFCH resource may be calculated as $(N\_R\_IntSch \times \Delta_\mu / M)$. Here, $\Delta_\mu$ may have different values depending on the subcarrier spacing, and may be a value of 10 or 11 at 15 kHz. $\Delta_\mu$ may be a value of 5 at 30 kHz. $(N\_R\_IntSch \times \Delta_\mu / M)$ may be increased to $(N\_R\_IntSch \times \Delta_\mu / M) \times$ N_PSFCH_Sym by the number of OFDM symbols (N_PSFCH_Sym) constituting the PSFCH. Here, $M^{D\_PSFCH}_{subch,slot}$, the number of dedicated PSFCH resources composed of detailed PSFCH resources, may be defined as one of Equations 8 to 11 below.

[Equation 8]

$$M^{D\_PSFCH}_{subch,slot} = (\ N\_R\_IntSch \times \Delta_\mu\ /\ M\ )\ /\ (\text{'PSFCH transmission periodicity'} \times$$

$$\text{'number of subchannels'} \times \text{'N'})$$

[Equation 9]

$$M^{D\_PSFCH}_{subch,slot} = (\ N\_R\_IntSch \times \Delta_\mu\ /\ M\ )\ /\ (\text{'PSFCH transmission periodicity'} \times$$

$$\text{'number of subchannels'})$$

[Equation 10]

$$M^{D\_PSFCH}_{subch,slot} = (\ N\_R\_IntSch \times \Delta_\mu\ /\ M\ ) \times N\_PSFCH\_Sym\ /\ (\text{'PSFCH transmission}$$

$$\text{periodicity'} \times \text{'number of subchannels'} \times \text{'N'})$$

[Equation 11]

$$M^{D\_PSFCH}_{subch,slot} = (\ N\_R\_IntSch \times \Delta_\mu\ /\ M\ ) \times N\_PSFCH\_Sym\ /\ (\text{'PSFCH transmission}$$

$$\text{periodicity'} \times \text{'number of subchannels'})$$

In the above, the number of subchannels may mean the number of interlaced subchannels for PSCCH/PSSCH transmission. The total configurable dedicated PSFCH resources may be determined by considering $M^{D\_PSFCH}_{subch,slot}$ N_PSFCH_CS values. Here, N_PSFCH_CS may have a default value of 1, 2, 3, or 6, and may be defined as a value added by taking N of N_C_PSFCH into consideration.

In the above, $(N\_R\_IntSch \times \Delta_\mu / M)$ may mean the number of resources configurable as the dedicated PSFCH resource.

In the above, dividing by N may mean distinguishing different resources in response to N transmission occasions.

The terminal may divide into N sets in the frequency domain as many as N transmission occasions, and within each set, may group M PRBs sequentially into a dedicated PSFCH resource within the same interlace. The terminal may determine the position or index of the PSFCH transmission resource within a set n corresponding to the n-th transmission occasion among N dedicated PSFCH resources distinguished as described above.

In an exemplary embodiment, the value of M of the same dedicated PSFCH resource may be determined to be a value greater than N of N_C_PSFCH. Here, the terminal may apply a cyclic shift or sequence capable of identifying N in the one dedicated PSFCH resource composed of M PRB(s) to the dedicated PSFCH resource with a large value of M. Here, the cyclic shift may be a cyclic shift different from CPRI, and may be applied differently depending on the value of N. Alternatively, the cyclic shift may be applied by simultaneously considering N of CPRI and N_C_PSFCH.

In another exemplary embodiment, the PSFCH may be transmitted in one or more PRB(s) of the M PRBs according to N. In configuring the M PRBs, the number of PRBs constituting an interlace subchannel may not be divided by M. This may be a case when 11 PRBs are configured as an interlace subchannel in case of 15kHz SCS. Alternatively, depending on a guard band configuration between RB sets, some numbers of subchannels cannot be used as a PSFCH transmission resource. As an exemplary embodiment, the 11-th PRB may be excluded from PSFCH resource configuration. Alternatively, as an exemplary embodiment, PRBs included in a guard band may be included in the PSFCH resource configuration. However, PRBs included in the guard band may actually be excluded from PSFCH transmission.

In determining a dedicated PSFCH resource index, a value indicating N occasions may correspond to Oc_Idx described above. For N occasions, the terminal may transmit the PSFCH in resources corresponding to the N different PSFCH transmission resource sets or dedicated PSFCH resources (or dedicated PSFCH sets) defined above. In other words, assuming N is 4, Oc_Idx for the first PSFCH transmission resource or occasion for one PSCCH/PSSCH may be 0 or 1. Oc_Idx for the last PSFCH transmission resource or occasion may be 3 or 4. In addition, in an exemplary embodiment, in order to change resource positions, a value of the n-th occasion or a value of Oc_Idx among the indexes of N transmission occasions or N opportunities may be determined by considering information on the index of the slot where PSCCH/PSSCH is transmitted and/or PSFCH_TRP. The terminal may determine the index of the set n corresponding to the n-th transmission occasion among the N dedicated PSFCH resources, determine an RB set to transmit the PSFCH according to an RB set in which the PSCCH/PSSCH is transmitted, and then determine an index of a cyclic shift pair.

Meanwhile, in regard to N_C_PSFCH, an operation for N PSFCH transmission occasions during the COT may be as follows. In regard to N_C_PSFCH within the COT, as an exemplary embodiment, it may be specified to be smaller than the number of N_C_PSFCH for which the PSFCH transmission occasions is defined within the COT. Here, the defined N_C_PSFCH may mean the number N_C_PSFCH of transmission occasions configured in the RB set. The terminal that initiates the COT and delivers information on the COT may share the COT with other terminal(s) by including the above information in the information on the COT. Here, from the perspective of the terminal for which the COT is shared, as an exemplary embodiment, the PSFCH transmission occasion may be defined as one bit information, and may be defined as having only one PSFCH transmission occasion or smaller PSFCH transmission occasions than N_C_PSFCH configured by the higher layer. It may be assumed that the terminal that initiates and shares the COT does not use the PSFCH resource for PSFCH transmission during the slot for transmitting PSCCH/PSSCH or before starting to share the COT.

The above-described information may be included in SCI and may be defined in relation to COT sharing information. Alternatively, if the COT is shared without the above-described information, all terminals sharing the COT may perform the same operation. Here, one PSFCH transmission occasion or PSFCH transmission occasions less than N_C_PSFCH may mean that the terminal(s) sharing the COT configure only one or fewer identical PSFCH transmission resources than N_C_PSFCH and transmits the PSFCH or reception response information. Here, when designated as one PSFCH transmission, the terminal may receive the PSCCH/PSSCH and transmit the PSFCH in the earliest resource capable of PSFCH transmission. Alternatively, the one PSFCH transmission occasion may be transmitted in the last configurable PSFCH resource during the COT period or length.

Alternatively, the one PSFCH transmission occasion may mean only a PSFCH resource that is configurable based on a PSCCH/PSSCH of the last slot among PSCCHs/PSSCHs transmitted from the terminal initiating the COT. Alternatively, the one PSFCH transmission occasion may be defined as a PSFCH transmission resource configured in the last slot of the COT period. Alternatively, the one PSFCH transmission occasion may be configured in one or more PSFCH transmission resources by considering the PSFCH configuration periodicity of PSFCH_TRP and the value of N_C_PSFCH.

In this case, PSFCH symbols or PSFCH resource corresponding to a period of (PSFCH_TRP × N_C_PSFCH) may be used. Alternatively, the last configurable PSFCH transmission resource during the COT period may be included along with the PSFCH resource according to the period of (PSFCH_TRP×N_C_PSFCH). In the above-described exemplary embodiment, the terminal(s) for which the COT is shared may utilize PSFCH resources available for PSFCH transmission during the COT period among the N possible PSFCH transmission occasions. In this case, each of the terminal(s) for which the COT is shared may use information on an index corresponding to the corresponding transmission occasion among the N occasions. Here, the index information may mean the determined PSFCH transmission resource.

Meanwhile, the terminal may transmit the PSFCH when an LBT procedure succeeds at an arbitrary time among the N_C_PSFCH PSFCH transmission occasions, regardless of the COT period. As an example, if the PSFCH is transmitted at a time that is smaller than N_C_PSFCH occasions, the terminal may not transmit reception response information or transmit the PSFCH in the remaining PSFCH transmission occasions.

Meanwhile, the terminal may not transmit reception response information or transmit the PSFCH in the PSFCH transmission occasion or configurable PSFCH transmission resource regardless of the COT period. As an exemplary embodiment, the terminal may not transmit any signal. In another exemplary embodiment, this may mean that the terminal uses the PSFCH resource for PSCCH/PSSCH transmission. As another exemplary embodiment, this may mean that the terminal transmits an arbitrary signal similar to a PSFCH signal. Here, the arbitrary signal may be defined as a signal obtained by using only information on the terminal to transmit the PSFCH or the terminal transmitting PSCCH/PSSCH in the same slot when generating a PSFCH signal or sequence.

Here, the terminal may use information on the terminal to transmit the PSFCH or the terminal transmitting PSCCH/PSSCH in the same slot to determine an arbitrary PSFCH transmission resource index. In the above, the information on the terminal to transmit the PSFCH may be the terminal or its ID information. In the above, the information on the terminal transmitting PSCCH/PSSCH in the same slot may be the terminal or its ID information.

Meanwhile, in regard to the PSFCH transmission resource, the terminal may determine a slot, symbols, index, and the like. Here, as described above, a method in which PSFCH resource, etc. are determined according to a predefined condition may be defined as a 'pre-configuration method' in the present disclosure. In addition, a method in which PSFCH transmission-related information is dynamically provided to the terminal through DCI and/or SCI may be defined as a 'dynamic allocation method' in the present disclosure.

The PSFCH transmission-related information of the dynamic allocation method may include at least one of the following a) to d).

- a) Whether the PSFCH is transmitted in a PSFCH occasion
- b) PSFCH resource index
- c) LBT type for PSFCH transmission
- d) PSFCH transmission symbol(s)

In the PSFCH transmission-related information, the PSFCH occasion may refer to a PSFCH transmission occasion of a slot that may include PSFCH transmission resources according to the PSFCH transmission periodicity.

The base station may generate DCI including the PSFCH transmission-related information. Additionally, the base station may transmit the DCI including the PSFCH transmission-related information to the terminal. The terminal may receive the DCI including the PSFCH transmission-related information from the base station. Accordingly, the terminal may obtain the PSFCH transmission-related information from the received DCI. Then, the terminal may generate SCI including the obtained PSFCH transmission-related information. The terminal may provide the SCI including the PSFCH transmission-related information to other terminals. Accordingly, the other terminals may receive the SCI including the PSFCH transmission-related information from the terminal. Then, the other terminals may obtain the PSFCH transmission-related information from the received SCI. Meanwhile, the terminal may configure one or more of the PSFCH transmission-related information as SCI. Additionally, the terminal may provide the SCI including the one or more of PSFCH transmission-related information to other terminals. Accordingly, the other terminals may receive the SCI including the one or more of PSFCH transmission-related information from the terminal. Then, the other terminals may obtain the PSFCH transmission-related information from the SCI.

In case of the RA-mode 1, the base station knows a scheduling status of the resource pool for the RA-mode 1, so the base station may control PSFCH transmission, PSFCH transmission resources, configuration of PSFCH transmission resources, etc. using the PSFCH transmission-related information.

The information a) in the PSFCH transmission-related information may be information indicating that symbols configured for PSFCH transmission in the PSFCH occasion indicated by the information a) are not used for PSFCH transmission. The terminal receiving the PSFCH transmission-related information including the information a) may delay PSFCH transmission by transmitting the PSFCH in a PSFCH occasion different from the PSFCH occasion indicated by the information a).

In addition, the terminal may expect that a resource of the PSFCH occasion indicated by the information a) may be occupied by other signals depending on the information a) in the PSFCH transmission-related information. In the present disclosure, the restriction of PSFCH transmission according to the information a) may be described by defining it as PSFCH non-transmission 'noTxPSFCH''.

Referring to FIG. 18, the terminal may not transmit the PSFCH in PSFCH occasions of slots (n-8) and (n-4) according to the information a). However, the information a) may be specific to the receiving terminal. Accordingly, other terminals may transmit PSFCHs in the PSFCH occasions of the slots (n-8) slot and (n-4).

The information b) in the PSFCH transmission-related information may include information on an index for transmitting the PSFCH in a detailed PSFCH resource, as index information for the PSFCH resource. Here, the index information for the PSFCH resource may include information on the PSFCH occasion (slot).

The information c) in the PSFCH transmission-related information may be information on an LBT type for the PSFCH transmission. The LBT type during the shared COT may be designated as the LBT-Type C, which means not actually performing an LBT procedure for PSFCH transmission.

The information d) in the PSFCH transmission-related information may include configuration or position of symbols of a PSFCH resource for the PSFCH transmission. During the shared COT, a cyclic prefix or cyclic postfix may be additionally configured in a gap symbol located before or after the PSFCH transmission. In another exemplary embodiment, the position of the PSFCH symbol may be specified. In the COT sharing, PSFCH symbols may be configured in the last two symbols of the slot. The PSFCH resource may configured together with the pre-configuration method and dynamic allocation method described above.

Exemplary embodiment 1

PSFCH resources according to the pre-configuration method may be configured according to a defined pattern or periodicity. PSFCH resources according to the dynamic allocation method may be configured within resource slots configured during the COT period or configured consecutively. In more detail, the pre-configuration method may be used when there are a PSFCH transmission resource or transmission occasions among slots capable of PSFCH transmission according to an LBT success. Here, a terminal performing an LBT procedure may be a terminal wishing to transmit a PSFCH. Alternatively, the pre-configuration method may be used if a terminal transmit a PSFCH when another terminal performs an LBT procedure and shares a COT.

The dynamic allocation method may include a case where a terminal performing an LBT procedure and providing information for sharing a COT activates or designates a PSFCH transmission resource using DCI or SCI during the COT period. Here, the activation may mean activation of a PSFCH transmission resource or transmission occasion according to resource configuration information defined in advance as an RRC message, or the like. Here, the designation may include allocating a PSFCH resource after X slots or allocating to a slot Y within the COT. Alternatively, a terminal transmitting a PSSCH during the COT period may be configured to indicate PSFCH transmission through SCI.

Another exemplary embodiment of the dynamic allocation method may include activating or designating a PSFCH transmission resource when transmission is configured in consecutive slots. Here, the activation may mean activation of a PSFCH transmission resource or transmission occasion according to resource configuration information defined in advance as an RRC message, or the like. Here, the designation may include allocating a PSFCH resource after X slots from a start slot of consecutive slots or allocating a PSFCH resource to a slot Y among consecutive slots. Alternatively, the designation may designate the last slot of consecutive slots.

In the above, information on X or Y may be defined by including bits of an arbitrary length in a field of DCI or SCI. In the case where the PSFCH transmission resource is designated as the last slot as described above, a PSFCH resource configuration status or resource configuration information may be included in the DCI or SCI. Here, a terminal transmitting a PSFCH in the corresponding slot may transmit the PSFCH after performing an LBT procedure of LBT-Type-B or LBT-Type-C. Additionally, the terminal transmitting a PSFCH in the corresponding slot may transmit an extended cyclic prefix within a guard symbol.

Information on the LBT type and/or the length of the extended cyclic prefix may be included in the DCI or SCI. Additionally, the PSFCH resource dynamically allocated as described above may be configured using all or part of a resource used for PSSCH/PSCCH transmission. When a part of the resource used for PSSCH/PSCCH transmission is configured as the PSFCH resource, different terminals may be configured with different parts of the resource and use them for PSFCH transmission. When a part of the resource used for PSSCH/PSCCH transmission is used for PSFCH transmission, the terminal may transmit the PSFCH after performing an LBT procedure of LBT-Type-C. In addition, when a part of the resource used for PSSCH/PSCCH transmission is configured as the PSFCH resource, the terminal may transmit a PSFCH with a cyclic prefix having an extended cyclic prefix length specified in advance or configured by an RRC message in the part of the resource.

Exemplary embodiment 2

PSFCH resources according to the pre-configuration method may be configured according to a defined pattern or periodicity. PSFCH resources according to the dynamic allocation method may be configured as resources in PSSCH/PSCCH transmission slots. A PSFCH resource configuration status or PSFCH resource configuration information may be included in DCI or SCI. Here, a terminal transmitting a PSFCH in the corresponding slot may transmit the PSFCH after performing an LBT procedure of LBT-Type-B or LBT-Type-C.

Additionally, the terminal transmitting the PSFCH in the corresponding slot may transmit an extended cyclic prefix within a guard symbol. Information on the LBT type and/or the length of the extended cyclic prefix information may be included in the DCI or SCI. Additionally, PSFCH resources dynamically allocated as described above may be configured using all or part of the resources used for PSSCH/PSCCH transmission. When some of the resources used for PSSCH/PSCCH transmission are composed of PSFCH resources, different terminals can receive some of the different resources from the base station and use them for PSFCH transmission. When a part of the resources used for PSSCH/PSCCH transmission is configured as the PSFCH resource, different terminals may be configured with different parts of the resources and use them for PSFCH transmission. When a part of the resources used for PSSCH/PSCCH transmission is used for PSFCH transmission, the terminal may transmit the PSFCH after performing an LBT procedure of LBT-Type-C. In addition, when a part of the resources used for PSSCH/PSCCH transmission is configured as the PSFCH resource, the terminal may transmit a PSFCH with a cyclic prefix having an extended cyclic prefix length specified in advance or configured by an RRC message in the part of the resource.

[Definition of operations according to an LBT failure]

In PSFCH transmission, the terminal may fail to transmit a PSFCH depending on a result of an LBT procedure in an unlicensed band. In this case, the terminal may transmit the PSFCH according to one or more of the following exemplary embodiments.

Exemplary embodiment A

There may be more than one PSFCH occasion per PSCCH/PSSCH. The exemplary embodiment A may specifically be the method described above with reference to FIG. 18.

Exemplary embodiment B

The exemplary embodiment B may correspond to a method of dynamically designating a position of a PSFCH transmission resource, which is described as the dynamic allocation method. Alternatively, transmission of the PSFCH may be newly configured to the terminal in which PSFCH transmission has failed through COT sharing, and the terminal may transmit the previous PSFCH that failed to transmit. Here, the base station may indicate the terminal to transmit the PSFCH by including information required to determine a transmission resource of the PSFCH for which transmission is to be attempted again. The information required for determining the transmission resource of the PSFCH may include, for example, a PSFCH transmission resource index. Additionally, the information required for determining the transmission resource of the PSFCH may include the matters described in relation to FIG. 18. Alternatively, the information required for determining the transmission resource of the PSFCH may include a value such as OC_Idx in FIG. 18. As another exemplary embodiment, the PSFCH transmission resource index may be determined according to a combination of one or more among information on a transmission slot of a PSCCH/PSSCH corresponding to the failed PSFCH, information on a transmission slot for the failed PSFCH, information on a transmission resource index of the failed PSFCH, an arbitrary value included when indicating PSFCH transmission again, and/or the like.

Exemplary embodiment C

The exemplary embodiment C may correspond to a method of performing non-numerical HARQ feedback and one shot HARQ feedback based on a trigger.

Exemplary embodiment D

There may be a method in which a terminal that needs to perform PSFCH transmission transmits PSFCH information by including it in a PSCCH/PSSCH transmission. In this case, a modified SCI or a new SCI including related field(s) may be defined. Here, a HARQ process and ACK/NACK information may be configured and transmitted in one field. In this case, the HARQ process may be indicated by a value configured in a received PSCCH corresponding to the PSFCH transmission.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a first terminal, comprising:

    receiving a physical sidelink shared channel (PSSCH) from a second terminal through a subchannel in a slot n;
    determining a physical resource block (PRB) set for transmitting a physical sidelink feedback channel (PSFCH) for the PSSCH based on the slot n and an index of the subchannel;
    identifying PRB(s) for transmitting the PSFCH from the PRB set;
    identifying a slot configured for transmitting the PSFCH after K slots from the slot n; and
    transmitting the PSFCH using the identified PRB(s) in the identified slot.

2. The method according to claim 1, wherein in the identifying of the slot configured for transmitting the PSFCH after K slots from the slot n, the first terminal identifies the slot configured for transmitting the PSFCH according to a PRB index determined based on at least one of the index of the subchannel configured for the PSSCH, the slot n, the K slots, an identifier (ID) of the first terminal, an ID of the second terminal, or a code q, the code q indicates a cyclic shift or a cyclic shift pair, and q is a positive real number.

3. The method according to claim 1, further comprising, before transmitting the PSFCH using the identified PRB(s) in the identified slot,

    identifying a transmission mode of the PSSCH; and
    in response to identifying that the transmission mode is a unicast mode, identifying a hybrid automatic repeat and request (HARQ) feedback state,
    wherein the PSFCH is transmitted when the HARQ feedback sate is in an enabled state.

4. The method according to claim 1, further comprising, before transmitting the PSFCH using the identified PRB(s) in the identified slot,

    identifying a transmission mode of the PSSCH; and
    in response to identifying that the transmission mode is a groupcast or broadcast mode, identifying an HARQ feedback state,
    wherein the PSFCH is transmitted based on a negative acknowledgement (NACK)-only scheme when the HARQ feedback sate is in an enabled state.

5. A method of a first terminal, comprising:

    receiving a physical sidelink shared channel (PSSCH) from a second terminal;
    generating PRB sets with unit physical sidelink feedback channel (PSFCH) resources each comprising a combination of PRB(s) and a cyclic shift;
    configuring a candidate PSFCH set with a predetermined number of PRB sets from the PRB sets based on an index of a subchannel through which the PSSCH is received;
    determining an index of a unit PSFCH resource for transmitting a PSFCH from the candidate PSFCH set; and
    transmitting the PSFCH to the second terminal using a unit PSFCH resource corresponding to the index of the determined unit PSFCH resource.

6. The method according to claim 5, wherein the generating of the PRB sets with unit PSFCH resources each comprising a combination of PRB(s) and a cyclic shift comprises: generating the PRB sets based on at least one of a transmission periodicity of a PSFCH transmission occasion resource (PSFCH TRP), PSFCH type, number of the PRB sets, number of cyclic shifts, or number N_C_PSFCH of repeated transmissions.

7. The method according to claim 6, further comprising, before generating the PRB sets with unit PSFCH resources each comprising a combination of PRB(s) and a cyclic shift,

    receiving, from the base station, information on the transmission periodicity of the PSFCH TRP;
    receiving, from the base station, information on the PSFCH type;
    receiving, from the base station, information on the number of the PRB sets constituting PSFCH resources; and
    receiving, from the base station, information on the number of cyclic shifts constituting PSFCH resources.

8. The method according to claim 5, wherein the determining of the index of the unit PSFCH resource for transmitting the PSFCH from the candidate PSFCH set comprises: determining the index of the unit PSFCH resource as a value obtained by performing a modulo operation on a sum of an identifier (ID) of the first terminal and an ID of the second terminal by a size of the candidate PSFCH set.

9. The method according to claim 5, further comprising:

    defining a PSFCH sequence generation factor according to an index of a cyclic shift pair corresponding to the index of the unit PSFCH resource; and
    generating a Zadoff-Chu sequence constituting the PSFCH according to the PSFCH sequence generation factor, wherein the first terminal transmits the PSFCH including the Zadoff-Chu sequence to the second terminal.

10. The method according to claim 5, wherein the unit PSFCH resources are unit interlace PSFCH resources each comprising a combination of PRB(s) and a cyclic shift pair, the PRB sets are interlace PRB sets, the candidate PSFCH set is a candidate interlaced PSFCH set comprising a predetermined number of interlaced PRB sets respectively mapped to indexes of cyclic shift pairs in the interlace PRB sets based on an index of the subchannel through which the PSSCH is received, and an index of the unit PSFCH resource is an index of a unit interlace PSFCH resource.

11. The method according to claim 10, further comprising:

    forming PSSCH-PSFCH transmission groups each including a PSFCH slot and PSSCH slots associated with the PSFCH slot;
    mapping each of the PSSCH-PSFCH transmission groups to a PSFCH occasion slot;
    determining an index of a cyclic shift pair for transmitting the PSFCH based on at least one of the ID of the first terminal, the ID of the second terminal, or an index of the PSSCH-PSFCH transmission group; and
    determining an index of a unit interlace PSFCH resource for transmitting the PSFCH in the candidate interlace PSFCH resource based on the index of the determined cyclic shift pair.

12. The method according to claim 10, wherein the first terminal transmits the PSFCH to the second terminal, when an LBT procedure is required for transmission of the PSFCH and the LBT procedure is successful.

13. The method according to claim 10, wherein the first terminal does not transmit the PSFCH to the second terminal, when the first terminal receives a non-transmission indication for PSFCH transmission.

14. A first terminal comprising a processor,
    wherein the processor causes the first terminal to perform:

    receiving a physical sidelink shared channel (PSSCH) from a second terminal;
    generating PRB sets with unit physical sidelink feedback channel (PSFCH) resources each comprising a combination of PRB(s) and a cyclic shift;
    configuring a candidate PSFCH set with a predetermined number of PRB sets from the PRB sets based on an index of a subchannel through which the PSSCH is received;
    determining an index of a unit PSFCH resource for transmitting a PSFCH from the candidate PSFCH set; and
    transmitting the PSFCH to the second terminal using a unit PSFCH resource corresponding to the index of the determined unit PSFCH resource.

15. The first terminal according to claim 14, wherein in the generating of the PRB sets with unit PSFCH resources each comprising a combination of PRB(s) and a cyclic shift, the processor further causes the first terminal to perform: generating the PRB sets based on at least one of a transmission periodicity of a PSFCH transmission occasion resource (PSFCH TRP), PSFCH type, number of the PRB sets, number of cyclic shifts, or number N_C_PSFCH of repeated transmissions.

16. The first terminal according to claim 14, wherein before generating the PRB sets with unit PSFCH resources each comprising a combination of PRB(s) and a cyclic shift, the processor further causes the first terminal to perform:

receiving, from the base station, information on the transmission periodicity of the PSFCH TRP;
receiving, from the base station, information on the PSFCH type;
receiving, from the base station, information on the number of the PRB sets constituting PSFCH resources; and
receiving, from the base station, information on the number of cyclic shifts constituting PSFCH resources.

17. The first terminal according to claim 14, wherein in the determining of the index of the unit PSFCH resource for transmitting the PSFCH from the candidate PSFCH set, the processor further causes the first terminal to perform: determining the index of the unit PSFCH resource as a value obtained by performing a modulo operation on a sum of an identifier (ID) of the first terminal and an ID of the second terminal by a size of the candidate PSFCH set.

18. The first terminal according to claim 14, wherein the processor further causes the first terminal to perform:

defining a PSFCH sequence generation factor according to an index of a cyclic shift pair corresponding to the index of the unit PSFCH resource; and
generating a Zadoff-Chu sequence constituting the PSFCH according to the PSFCH sequence generation factor, wherein the first terminal transmits the PSFCH including the Zadoff-Chu sequence to the second terminal.

19. The first terminal according to claim 14, wherein the unit PSFCH resources are unit interlace PSFCH resources each comprising a combination of PRB(s) and a cyclic shift pair, the PRB sets are interlace PRB sets, the candidate PSFCH set is a candidate interlaced PSFCH set comprising a predetermined number of interlaced PRB sets respectively mapped to indexes of cyclic shift pairs in the interlace PRB sets based on an index of the subchannel through which the PSSCH is received, and an index of the unit PSFCH resource is an index of a unit interlace PSFCH resource.

20. The first terminal according to claim 19, wherein the processor further causes the first terminal to perform:

forming PSSCH-PSFCH transmission groups each including a PSFCH slot and PSSCH slots associated with the PSFCH slot;
mapping each of the PSSCH-PSFCH transmission groups to a PSFCH occasion slot;
determining an index of a cyclic shift pair for transmitting the PSFCH based on at least one of the ID of the first terminal, the ID of the second terminal, or an index of the PSSCH-PSFCH transmission group; and
determining an index of a unit interlace PSFCH resource for transmitting the PSFCH in the candidate interlace PSFCH resource based on the index of the determined cyclic shift pair.

【FIG. 1】

【FIG. 2】

【FIG. 3】

| system frame #1023 | system frame #0 | system frame #1 |
|---|---|---|

10ms

| system frame #1023 | system frame #0 | system frame #1 | system frame #2 |
|---|---|---|---|

| subframe #0 | subframe #1 | subframe #2 | subframe #3 | subframe #4 | subframe #5 | subframe #6 | subframe #7 | subframe #8 | subframe #9 |
|---|---|---|---|---|---|---|---|---|---|

1ms

half framer #0 (5ms)

half framer #1 (5ms)

【FIG. 4】

subframe (1ms)

| slot #0 | slot #1 | ... | slot #n |

【FIG. 5】

slot

| #0 | #1 | #2 | #3 | #4 | #5 | #6 | #7 | #8 | #9 | #10 | #11 | #12 | #13 |

OFDM symbol

【FIG. 6】

slot

| #0 | #1 | #2 | #3 | #4 | #5 | #6 |

OFDM symbol

【FIG. 7】

N subcarriers

N OFDM symbols

REG

RE

【FIG. 8】

slot

0  1  2  3  4  5  6  7  8  9  10  11  12  13

▦ : PDCCH region    ▨ : PDSCH region

【FIG. 9】

: PDCCH region    : PDSCH region

【FIG. 10】

: PDCCH monitoring occasion

[FIG. 11]

| : PDCCH monitoring occasion #0
| : PDCCH monitoring occasion #1
| : PDCCH monitoring occasion #2

EP 4 597 902 A1

**[FIG. 12]**

S-SSB subcarrier ↕ ⬚ : PSBCH, S-PSS, S-SSS

subchannel ↕ ☐ : PSCCH, PSSCH

▦ : sidelink resource pool

subchannel ↕ ☐▮ : PSCCH, PSSCH, PSFCH

【FIG. 13】

【FIG. 14】

COT

other signals | initial signal | burst signal → time

▤ : initial signal

【FIG. 15】

COT

other signals | PDCCH | burst signal → time

▨ : PDCCH region

【FIG. 16】

【FIG. 17】

candidate PSFCH resources

interlace
PSFCH resource

1 PRB

PRB
domain

1

0

0   1   3                                    A

cyclic shift pair index domain

0   1   2                                    A

[FIG. 18]

EP 4 597 902 A1

## INTERNATIONAL SEARCH REPORT

| International application No. |
|---|
| **PCT/KR2023/014427** |

### A. CLASSIFICATION OF SUBJECT MATTER

**H04L 5/00**(2006.01)i; **H04W 72/25**(2023.01)i; **H04W 72/04**(2009.01)i; **H04L 1/18**(2006.01)i; **H04L 1/00**(2006.01)i; **H04W 74/08**(2009.01)i; **H04W 72/232**(2023.01)i

According to International Patent Classification (IPC) or to both national classification and IPC

### B. FIELDS SEARCHED

Minimum documentation searched (classification system followed by classification symbols)

H04L 5/00(2006.01); H04W 28/02(2009.01); H04W 4/40(2018.01); H04W 72/02(2009.01); H04W 72/04(2009.01); H04W 72/10(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬롯 (slot), 서브 채널 (sub channel), PSSCH (physical sidelink shared channel), PRB (physical resource block), 사이클릭 시프트 (cyclic shift)

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0037532 A (KT CORPORATION) 06 April 2021 (2021-04-06) <br> See paragraphs [0199]-[0268]. | 1-20 |
| A | US 2022-0232575 A1 (LG ELECTRONICS INC.) 21 July 2022 (2022-07-21) <br> See claims 1-13. | 1-20 |
| A | US 2022-0190983 A1 (GUANGDONG OPPO MOBILE TELECOMMUNICATIONS CORP., LTD.) 16 June 2022 (2022-06-16) <br> See claims 1-17. | 1-20 |
| A | WO 2022-027291 A1 (APPLE INC.) 10 February 2022 (2022-02-10) <br> See claims 1-7. | 1-20 |
| A | US 2021-0321368 A1 (QUALCOMM INCORPORATED) 14 October 2021 (2021-10-14) <br> See paragraphs [0035]-[0079]. | 1-20 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **18 January 2024** | **18 January 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 597 902 A1

## INTERNATIONAL SEARCH REPORT
### Information on patent family members

International application No.

**PCT/KR2023/014427**

| Patent document cited in search report | | | Publication date (day/month/year) | Patent family member(s) | | | Publication date (day/month/year) |
|---|---|---|---|---|---|---|---|
| KR | 10-2021-0037532 | A | 06 April 2021 | CN | 112564865 | A | 26 March 2021 |
| | | | | KR | 10-2343883 | B1 | 29 December 2021 |
| | | | | US | 11589349 | B2 | 21 February 2023 |
| | | | | US | 2021-0099994 | A1 | 01 April 2021 |
| US | 2022-0232575 | A1 | 21 July 2022 | CN | 115152173 | A | 04 October 2022 |
| | | | | EP | 4089945 | A1 | 16 November 2022 |
| | | | | JP | 2023-516997 | A | 21 April 2023 |
| | | | | KR | 10-2023-0002283 | A | 05 January 2023 |
| | | | | WO | 2021-215829 | A1 | 28 October 2021 |
| US | 2022-0190983 | A1 | 16 June 2022 | BR | 112022005613 | A2 | 19 July 2022 |
| | | | | CN | 113994749 | A | 28 January 2022 |
| | | | | CN | 114466461 | A | 10 May 2022 |
| | | | | CN | 114466461 | B | 18 July 2023 |
| | | | | EP | 4013161 | A1 | 15 June 2022 |
| | | | | EP | 4013161 | B1 | 23 August 2023 |
| | | | | EP | 4246862 | A2 | 20 September 2023 |
| | | | | EP | 4246862 | A3 | 29 November 2023 |
| | | | | FI | 4013161 | T3 | 21 September 2023 |
| | | | | JP | 2022-549595 | A | 28 November 2022 |
| | | | | KR | 10-2022-0071963 | A | 31 May 2022 |
| | | | | WO | 2021-062613 | A1 | 08 April 2021 |
| | | | | WO | 2021-062972 | A1 | 08 April 2021 |
| | | | | WO | 2021-062978 | A1 | 08 April 2021 |
| | | | | WO | 2021-063002 | A1 | 08 April 2021 |
| WO | 2022-027291 | A1 | 10 February 2022 | BR | 112023002110 | A2 | 28 February 2023 |
| | | | | CN | 116097675 | A | 09 May 2023 |
| | | | | EP | 4165885 | A1 | 19 April 2023 |
| | | | | EP | 4165885 | A4 | 05 July 2023 |
| | | | | JP | 2023-536200 | A | 23 August 2023 |
| | | | | US | 2022-0311582 | A1 | 29 September 2022 |
| US | 2021-0321368 | A1 | 14 October 2021 | None | | | |

Form PCT/ISA/210 (patent family annex) (July 2022)